# EUROPEAN PATENT SPECIFICATION

(11) **EP 1 010 230 B1**
(45) Date of publication and mention of the grant of the patent: **01.10.2003**
(21) Application number: 98914836.6
(22) Date of filing: 24.03.1998
(51) Int. Cl.: H02J 1/14, H02J 13/00, A61C 1/00

(54) **AN APPARATUS FOR CONTROLLING AND POWER FEEDING A NUMBER OF POWER-CONSUMING PARTS**
GERÄT ZUR STEUERUNG UND VERSORGUNG EINER ANZAHL ELEKTRISCHER VERBRAUCHER
APPAREIL DE COMMANDE ET D'ALIMENTATION DE PLUSIEURS ELEMENTS CONSOMMANT DE L'ENERGIE

(30) Priority: 08.04.1997 DK 39597
(43) Date of publication of application: 21.06.2000
(73) Proprietor: Reipur Technology A/S, 2820 Gentofte (DK)
(72) Inventor: REIPUR, John, DK-2930 Klampenborg (DK); MAHNCKE, Christian, Nicolai, DK-2200 Copenhagen N (DK)
(74) Representative: Plougmann & Vingtoft A/S
(86) International application number: DK9800118
(87) International publication number: WO98045923

(56) References cited:
- EP-A- 0 409 226
- EP-A- 0 660 489
- WO-A-90/09050
- DE-A- 19 514 738
- US-A- 5 211 558

## Description

The present invention relates to apparatus for controlling and power feeding a number of power-consuming parts and especially to safety aspects in controlling the power feeding to such parts.

In a wide range of applications, a number of power-consuming parts is connected to a central unit power feeding such parts. However, most power sources have an upper limit within which the power consumption should be kept. Exceeding that power limit may cause fuses to blow or cause other actions, which totally or partly cut away the power fed to the central unit and thereby the power available to the power-consuming parts.

In a number of applications, it would be most undesirable or even unacceptable, if the power available to certain parts was decreased or fully taken away. One manner of avoiding this would be to use several power sources so that the applications that absolutely require power are power fed by one or more power sources and where the less important applications are fed by a separate power source. However, this is not desired due to the increased costs - and due to the system not always being able to guarantee power to the important applications.

One situation where this problem incurs is in a dental clinic where a number of motors, drills, pumps, lamps and instruments for use in electro surgery are used at intervals - and often a large number at the same time. If the power limit of the power source is exceeded, a fuse may blow, whereby all instruments are stopped. Stopping a drill or an instrument for electro surgery in the middle of its operation may be extremely painful to the patient and should be avoided.

Different types of manners of controlling and distributing power may be seen in WO90/09595, EP-A-0 660 489, DE-A-195 14 738, EP-A-0 409 226, and US-A-5,211,558.

The present invention relates to a solution to this problem. In a first aspect, the invention relates to an apparatus according to claim 1.

Thus, an intelligent solution is provided wherein the external units forward information relating to the amount of power which the power-consuming part wishes to use during its operation. The safety module then evaluates whether, with the present power consumption, this part may be fed with the power desired or required. If this is not the case, action may be taken in a number of manners, see below.

Also, in order for the external units and the safety module to be able to communicate, two power supplies are provided - both controlled by the safety module - where one is provided for communication, in order for the safety module to be able to determine what type of external unit is requesting power, and the amount of power requested - and one is provided for the actual power feeding of the power-consuming part.

When the safety module is adapted to control both power sources, it may be adapted to provide power on the first source only in order to determine whether the second source should provide power - and then provide the power determined. In this manner, the safety module maintains control over the power consumption, whereby unintended interruptions may be avoided.

Preferably, the receiving and determining means are adapted to determine an amount of power actually consumed by the power-consuming part of an external unit and to compare this amount to one or more maximum power limits. In this manner, not only the total power consumption is monitored and controlled, but also the power consumption of the individual parts may be monitored. One advantage thereof is a situation where the power-consuming part attempts to draw more power than initially requested - such as if it was short-circuited. In that manner, the safety module may immediately cut off the power to that part.

Thus, the receiving and determining means are preferably adapted to have the second providing means reduce - or cut of - the power supplied to a power-consuming part, if the power consumed thereby exceeds a maximum power limit.

The apparatus may further comprise display means for providing information to an operator of the apparatus. As will become evident below, this display means may be used to inform the operator of conflicts in the desired power consumption and to ask the operator to solve the conflict.

In a simple embodiment, the receiving and determining means of the safety module will be adapted to, when receiving information from an external unit desiring or requiring power, determine that
- if the result output by the comparing means means that the power required by the power-consuming parts of the plurality of external units equals or is less than the maximum power consumption limit, the desired or required power is provided to the power-consuming part of the external unit , and
- if the result output by the comparing means means that the power required by the power-consuming parts of the plurality of external units exceeds the maximum power consumption limit, no power is provided to the power-consuming part of the external unit.

In many applications, a power-consuming part may not constantly require or use the same amount of power, such as it is often the case with lamps. When the power-consuming part is e.g. a motor, a drill or a pump, different rpm's may be provided which require different amounts of power.

In order for the safety module to be able to adapt to that situation., it should preferably be informed when a change is requested in power consumption. Subsequently, the safety module will evaluate whether this request for increased power can be accepted.

The transmitting means and the power-consuming means are detachably interconnected, and the determining means of the external unit are at least substantially fixedly interconnected to the power-consuming part. This has the advantage that the transmitting means of the external units may be general purpose parts, and where the application specific information is generated at the determining means at the power-consuming part and is transmitted to the transmitting means - when the two parts are interconnected.

When the transmitting means are adapted to receive the information from the determining means at the power-consuming part and relay this information to the safety module - instead of the transmitting means being adapted to always request the same amount of power -, the safety module is always informed of a realistic amount of power desired or required. This means that the power available is utilised in an optimum manner.

The simplest and most versatile operation of the safety module is one where the second providing means are adapted to provide a common voltage to all external units, and wherein at least part of the external units comprise means for converting the common voltage to a voltage suitable for the power-consuming parts thereof. In this situation, the power-consuming part of the at least part of the external units preferably comprises means for generating information relating to an operating voltage for the power-consuming part and means for transporting the information to the converting means, the converting means being controllable by the information so as to convert the common voltage to the operating voltage.

Naturally, compared to the external units being formed by two detachable parts (a power-consuming part comprising means for holding or determining information and for relaying to the second part which communicates with the safety module) this will provide multipurpose units, blocks or parts which may be used in connection with a number of power-consuming parts.

In fact, in the presently preferred embodiment, the two parts are fully separated and connected to the safety module at different positions. However, naturally, the two parts interact, and the power provided from the safety module is provided to the power consuming part via the second part. This separation of the two parts has the advantage that a failure in one does not cause the other not to work. Also, different second parts may be used in connection with different power consuming parts, whereby a second part is not necessarily rendered useless if a power consuming part fails.

A further preferred situation where, in addition, the external units comprise engaging means for engaging with corresponding engaging means of the safety module in order to transfer power and controlling information from the safety modules to the external units, the engaging means of the external units being substantially identical. In this manner, any number of different - and future - applications may be supported by the same apparatus. This also facilitates the use of new applications, as the "plugs" are the same as those known to the operator.

This has the advantage that fewer parts need be purchased when desiring a new feature in the apparatus.

However, this splitting of the external unit up into two parts also introduces a potential problem in that a power-consuming part may require more power than the other part of the external unit is able to handle or a voltage different from those which the other part is able to generate from the common voltage. This brings about the potential problem that the power-consuming part or the other part is destroyed or not driven correctly.

In that situation, therefore, preferably
- the power-consuming part is adapted to hold and transmit information relating to its power and voltage requirements,
- the other part of the external unit is adapted to hold and transmit information relating to its power handling and voltage converting capabilities,
the other part of the safety module then preferably being adapted to receive that information and to evaluate whether the interconnection of the two parts is allowable. The safety module being adapted to use that evaluation in its determination of how much - if any - power to provide to the power-consuming part.

Alternatively, the safety module may receive the information from both parts in order to be able to perform the evaluation.

In order to be able to determine which of the power-consuming parts is not to receive power (or to receive less power than requested), the apparatus preferably further comprises means for holding information relating to a list of priorities relating to the relative importance of the operation of the power requiring parts of the external units. Naturally, the relative priority between power-consuming parts may differ between applications, whereby several lists may be provided, or the list may be altered between applications.

If it is not inherently known which power-consuming parts are to be power fed, a simple manner of providing this information is one wherein at least one of the external units comprises means for holding and transmitting information to the safety module, the information relating to the importance of the operation of the power-consuming part of the external unit.

In the situation described above, where the power-consuming part may be separated from the remainder of the external unit, the holding and transmitting means is preferably positioned at the power-consuming part of the external unit, as the importance relates to the operation thereof.

Normally, the receiving and determining means, when the power required exceeds the maximum power consumption limit, will be adapted to primarily allocate power to the power requiring parts, the operation of which are the most important. However, how "primarily" is interpreted will depend on the actual strategy selected as to how the remaining parts are power fed. Preferably, the receiving and determining means are further adapted to allocate less than or none of the power required or desired by a power-consuming part adapted to perform a less important operation.

In this manner, it may be determined that power is allocated so that the most important parts are allocated their full, desired power - taken in an order of importance - and where the less important parts are allocated no power.

Where some parts are adapted to operate on a smaller amount of power than the one desired, these parts may be adapted to inform the safety module thereof, and the determining means may be adapted to determine that these parts are allocated power in the interval between the power desired and the smaller amount of power.

Other power-consuming parts may comprise timing means controlling an operation of the power-consuming part by operating the power-consuming part in a predetermined period of time between a starting time and an ending time. Parts of this type may be lamps used for hardening material. This hardening normally is performed during a predetermined period of time.

In this situation, the transmitting means of the external unit is preferably adapted to transmit to the safety module information relating to a remaining period of time between an actual time to the stopping time, and the receiving and determining means may be adapted to base the determination of how much power to provide to the power-consuming part on whether the remaining period of time and the power required or desired by the power-consuming part are below a predetermined limit.

This assessment may be based on information relating to how much power is available and how much is required. If the power required by the timed part is within a safety limit within which the safety module operates, the timed part may be allowed to keep operating - even if the total power drawn is close to or above the maximum power consumption limit.

Instead of only basing the determination of what power to provide to which power-consuming parts, the receiving and determining means, when the power required or desired exceeds the maximum power consumption limit, may, via the display means, be adapted to request the operator to insert into the holding means information relating to the list of priorities or information relating to which power-consuming part is to receive power or is not to receive power. A situation of this type may be one where the safety module has to choose between two parts having the same priority.

Naturally, the apparatus also preferably comprises means for providing power to the safety module. In many applications, the power means are rechargeable battery means and means for recharging the battery means. Also, the recharging means might comprise means for connecting the recharging means to the low voltage DC power supply.

In certain instances, such as when performing electro surgery, means are preferred for preventing connection of the recharging means to the power supply, in order to ensure that only battery powering takes place. This obviates the danger of a fuse blowing and stopping the surgery. At present, strict requirements apply as to the electro surgery instrument having to be galvanically separated from the mains power grid. Naturally, this is obtained using solely battery power.

In order to intelligently ensure that the powering of the module is solely based on the battery, the preventing means could comprise means for communicating with the safety module, and wherein the receiving and determining means of the safety module are adapted to determine whether the preventing means are in operation. One preferred manner of ensuring that no external or non-battery powering takes place even though the preventing means are in action is one where the preventing means communicate via plugs normally used for power supplying the recharging means. In that manner, external feeding via the same plugs will be prevented (especially if the communicating means of the preventing means would cease operation if being exposed to e.g. mains or another external voltage/power).

Thus, especially when the power-consuming part of one external unit is one adapted for electro surgical treatment, the receiving and determining means of the safety module are adapted to determine that no power is provided by the second providing means, if the preventing means are not in operation.

Also, the rechargeable battery means may comprise means for generating information relating to the power remaining in or presently being derived or derivable from the rechargeable battery means, and further comprising means for transmitting that information to the safety module, the comparing means being adapted to use that information as the maximum power consumption limit.

In a number of applications, it will be desired that means be provided for inputting information for use in the operation of the safety module or of the power-consuming part of an external unit. Often, the inputting means are adapted to be operated by a foot.

In that situation, it should be determined which input information should operate which power-consuming part. A solution to that is one wherein the power-consuming parts hold that information, whereby
- the power-consuming part of at least one external unit is adapted to be controlled by predetermined information input at the inputting unit,
- the external unit is adapted to inform the safety module of the predetermined information, and
- the safety module comprises means for evaluating the information input by the inputting means and for relaying such information to the external unit, if the information corresponds to the predetermined information.

An especially preferred embodiment of the present invention is as an apparatus for use in a dental clinic or the like according to claim 28, wherein the power-consuming parts of the external units are parts adapted to be used in the treatment of a patient's teeth. In that embodiment, the power-consuming parts may comprise
- lamps, such as lamps for emitting radiation for use in illumination or lamps for emitting radiation for use in hardening of materials,
- motors, such as motors for drills,
- pumps, such as pumps for water or air, and/or
- instruments for use in electro surgery,

In order for the safety module to determine which power-consuming parts are to receive power, at least one of the external units comprises means for holding and transmitting information to the safety module, the information relating to the importance of the operation of the power-consuming part of the external unit, and wherein
- any external units the power-consuming parts of which are lamps are adapted to hold and transmit information relating to a first priority
- any external units the power-consuming parts of which are motors are adapted to hold and transmit information relating to a second priority
- any external units the power-consuming parts of which are pumps are adapted to hold and transmit information relating to a third priority, and
- any external units, the power-consuming parts of which are for use in electro surgery, are adapted to hold and transmit information relating to a fourth priority.

In that situation, the fourth priority may be higher than the first, second and third priority, and the first priority is preferably lower than the second and third priority.

Also, in this embodiment, the apparatus may further comprise a reservoir means for holding water, such as sterile or de-mineralised water, and the power-consuming part of an external unit may comprise a pump for providing water from the reservoir means to the patient's mouth.

Additionally or optionally, the apparatus may further comprise a waste holding means for holding waste liquid, and the power-consuming part of an external unit may comprise a pump for sucking excess liquid from the patient's mouth and into the waste holding means.

Additionally or optionally, the apparatus may further an external unit for providing pressurised air, the power-consuming part of the external unit comprising a pump means.

Especially when the apparatus comprises comprise a rechargeable battery for power supplying the safety module and thus the external units, and also means for providing pressurised air, a water reservoir, and waste holding means, the apparatus may be totally independent of other sources or reservoirs, whereby it is fully mobile.

The alternative may be seen in standard dental clinics where stationary feeding lines are provided for water, pressurised air, waste liquid and power. The installing costs of these feeding lines are, thus, fully obviated by providing these facilities directly on the apparatus.

In a second aspect, the mobility of the apparatus of claim 28 for use in a dental clinic is used in order to provide a totally new concept in instrumentation for use in dental clinics. In this aspect, a mobile unit for use by a dentist in a dental clinic is provided, the mobile unit comprising a chair-like means, for the dentist to sit or rest on during treatment of a patient, and an apparatus according to the second aspect according to the invention.

Preferably, the chair-like means comprise a seat for the dentist to sit or rest on, a back and a holding means for holding the apparatus, the back having a shape being at least substantially a part of a circle, and the holding means preferably comprise one or more parts each having a shape being at least part of a circle.

The holding means are advantageously movable between a first, closed position and a second, open position, wherein in the first position, the holding means and the back form a substantially circular cylindrical shape, at least substantially horizontal shape, the seat preferably being positioned within the circular cylindrical shape, seen in a vertical direction. When the apparatus is also positioned within the circle, it is protected in the closed position from shocks caused by moving or storing the chair when not in operation.

A number of advantages are obtained when the chair-like means further comprise a second at least substantially circular cylindrical means positioned vertically lower than and having at least substantially the same outer dimensions as the back and holding means. This means may be used for the operator, typically a dentist or an assistant thereto, to rest his/her feet on, or the pedals for controlling the power-consuming parts may be provided thereon. Alternatively, these may be provided on a separate unit connected to the chair.

Also, the second at least substantially circular cylindrical means may comprise means for engaging a power source and means for transmitting received power to a battery means adapted to provide power to the safety module. Typically, the power source will be provided at a position remote from the position where the patient is treated. In this manner, it may be ensured that the apparatus is solely powered by a battery.

In an especially preferred embodiment, the mobile unit is adapted to not require addition or feeding of water, power, or pressurised air from a position external to the unit and to not require access to waste containing facilities outside the unit when in operation - that is, when used for treating the teeth of a patient.

As described above, the apparatus may itself comprise means for power supplying the safety module. In order to increase the operating lifetime (between recharging), the apparatus may comprise another and/or a battery with a power content than that normally provided with the apparatus. This other battery may be provided at the chair-like means in order for it to be hidden and not to add to the size of the apparatus.

It should be noted that when using the present apparatus in connection with a chair-like means, this unit might be fully mobile and require no feeding or waste lines what so ever during operation. This brings about a number of advantages in that this unit may be treated in a manner different from that wherein standard, fixed dental equipment is treated.

The best manner of illustrating the advantages of this mobile unit is in connection with a new type of dental clinic facilitated by this mobile unit.

Therefore, a third aspect of the invention relates to a dental clinic comprising one or more chair-like means for patients to rest in during treatment of their teeth and one or more of the above-mentioned mobile units.

An interesting embodiment thereof is one where the clinic is adapted to not comprise fixed leads, lines, or wires for feeding water, power or waste liquid to or from the mobile units during treatment of a patients teeth. This especially makes the mobile units mobile, and due to this mobility, differently equipped units may now be used in a clinic, where a unit having the right equipment is moved to a patient requiring treatment with that equipment.

Formerly, the equipment at each patient's bed or seat would be equipment for use in a wide range of treatments, whereby a standard clinic would typically have duplicates of equipment, which is rarely used. Naturally, this adds-to the cost of setting up a dental clinic.

Also, as a large portion of the standard equipment has hitherto been stationary in the clinic, cleaning this equipment has been difficult.

As the units are now mobile, this is facilitated, as the clinic may now further comprise a location for use in cleaning power consuming parts of external units having been used in a treatment of a patients teeth. Preferably, this location is different from locations where the chair-like means for the patients are positioned.

This will facilitate the building of a bacteriological barrier between patients, as the unit may now be cleansed or sterilised between patients. While one unit is sterilised or cleansed, another unit may take its place, whereby all the patient's beds or seats may be used while units are cleansed.

Also, as the units are mobile, they may be positioned inside a cleansing means, such as a UV radiating means, ion emitting means, electron emitting means, whereby the surfaces of the whole unit may be sterilised.

Naturally, the mobility of the unit also has a number of other advantages. As the clinic may comprise a number of units having thereon different equipment, only one or a few units need be equipped for rare or complicated treatments, and a number of units may be equipped to only handle standard operations. If a patient suddenly requires the more advanced equipment, the unit holding it may be moved to the patient. This decreases the cost of the total amount of equipment in the clinic.

An additional embodiment is one where another category of mobile unit is provided for not the dentist but for his/her assistant. This unit may be provided with only the most basic equipment, such as suction, whereby this unit alone need be used by a patient, when the treatment is over, and where, e.g. a filling is drying.

Also, this assistants unit may be removed by a robot arm holding the suction in order for the assistant only to be used in relation to patients requiring a more skilled assistance.

Also, as the unit is easily moved, it is perfect for use by mobile dentists, such as dentists paying visits in the patients private home or for setting up clinics in semi-permanent places - or for use in the field before permanent or semi-permanent housing has been set up.

A use of this type will be in less developed areas, fugitive camps, or in disaster areas. As the unit may be self-contained, no power or water is required in order to have the unit operational.

In the following, preferred embodiments of the aspects the invention, which relate to dental equipment, will be described with reference to the drawing, wherein
Fig. 1 illustrates a preferred embodiment of the apparatus according to the invention, the apparatus being fitted with a number of external units,
Fig. 2 illustrates the embodiment of Fig. 1 seen from the back, and where the external units have been removed,

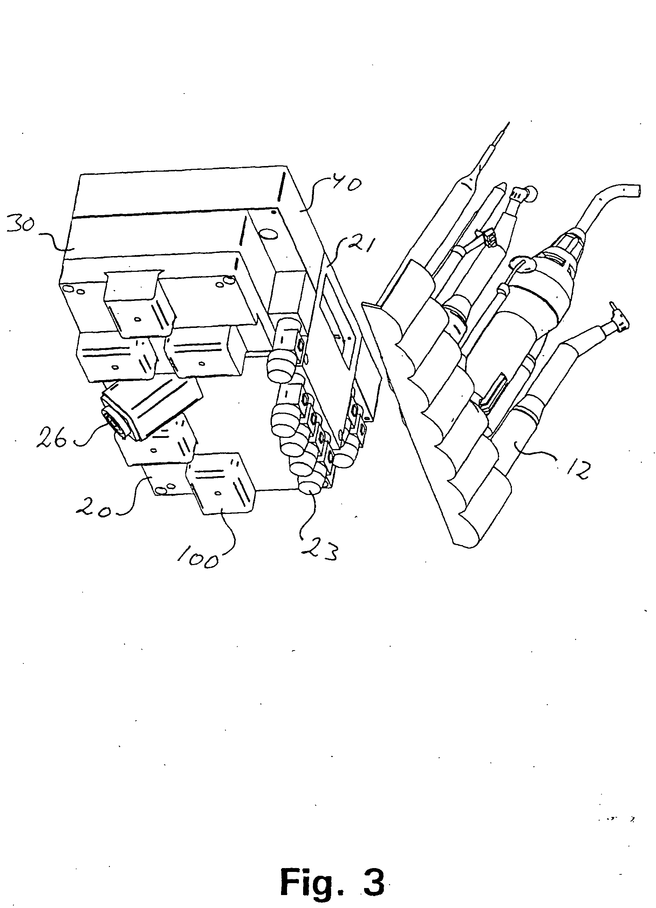

Fig. 3 illustrates the embodiment of Fig. 1 seen from below,
Fig. 4 is a circuit diagram of electronics in the safety module,
Fig. 5 is a circuit diagram of fuse circuits of the safety module,
Fig. 6 is a circuit diagram illustrating the flow of power and information between the safety module and the external units,
Fig. 7 is a circuit diagram illustrating the electronics relating to a LCD,
Fig.'s 8 and 9 illustrate circuits controlling the charging and discharging of the battery in the module,
Fig. 10 illustrates circuitry for use in a block for providing power and control to a motor,
Fig. 11 illustrates circuitry for use in a block for providing power to a lamp,
Fig. 12 illustrates a preferred embodiment of a chair according to the second aspect of the invention for the dentist to sit on, and
Fig. 13 illustrates a dental clinic according to the third aspect of the invention.

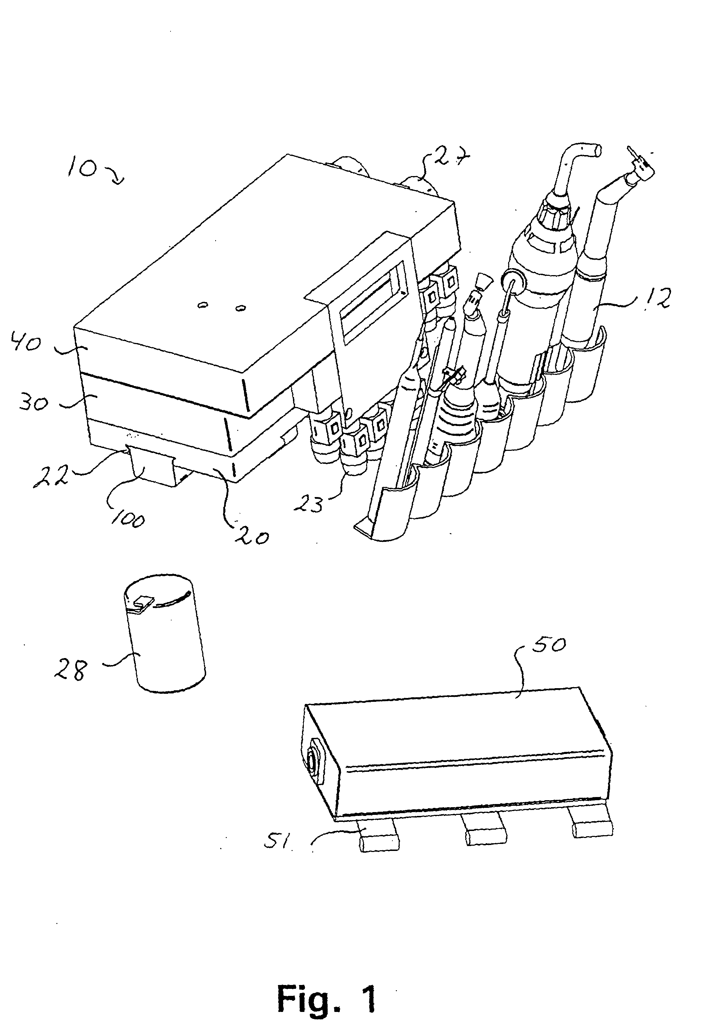

With reference to Fig.'s 1-3, the apparatus 10 comprises a safety module 20, a compressor module 30, and a high power module 40. The safety module 20 comprises a LCD 21 and a number of slots 22 for receiving blocks 100 (See Fig. 1) which form part of the external units which in the present embodiment are formed by a block 100 and a power-consuming tool (exemplified by 12) controlled via the block 100 (see below).

In the present embodiment, the tools 12 are not directly connected to the block 100 but are so via the safety module 20 - via plugs 23 via which the tools 12 are connected to the module 20. One reason for this is that the tools 12 may communicate directly with the safety module 20 without any interference by the blocks 100. However, the operation of the apparatus 10 may be exactly the same as if the tools 12 were directly connected to the blocks 100.

Also, the apparatus 10 comprises a module 50 comprising a battery (not illustrated) for power feeding the safety module 20 and through that the tools 12. This module 50 also comprises three pedals 51 for controlling the operation of the safety module 20 and the tools 12. Power and communication between the module 50 and the module 20 takes place via plug 26 in the module 20.

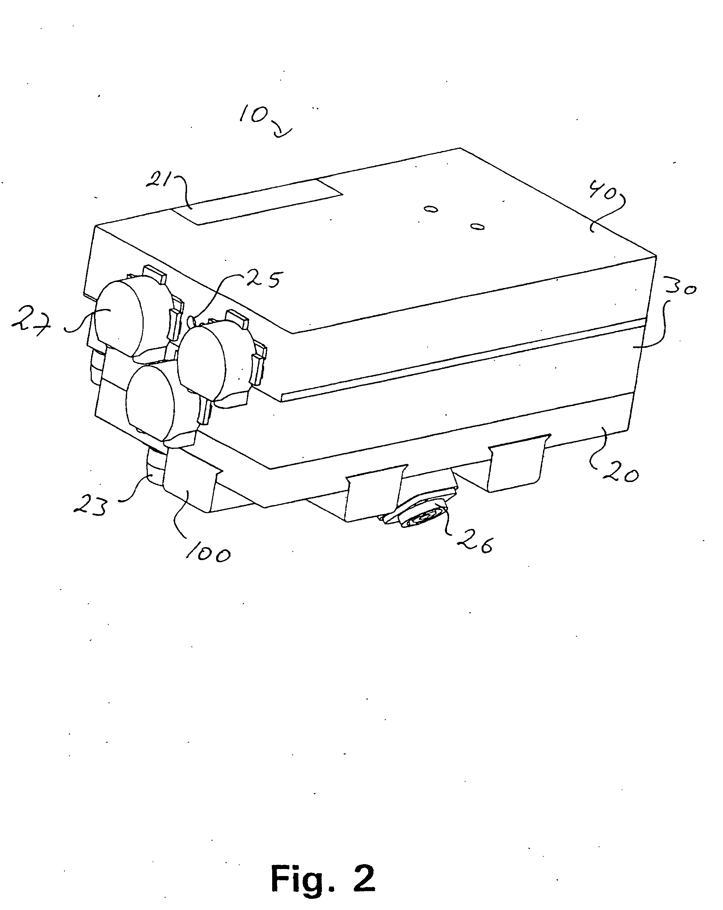

The power-consuming parts of the tools 12 may be, as is the case with e.g. drills, positioned in the actual tool, and in others may be positioned remote therefrom. Examples of the second type are tools for providing air or liquid or for removing liquid. In tools of this type, the pumps required are preferably positioned at the safety module 20 in order to facilitate handling of the actual tool. In Fig. 2, motors are provided for driving peristaltic pumps 27, which may be fastened on the outer side of the housing of modules 30 or 40.

The operation of the motors is controlled by electronics (described further below) provided within the modules 30 and 40 in the same manner as the tools 12 are controlled by the blocks 100.

The module 30 is a module for operating a three-way instrument used for providing water and/or air to the patient's mouth. Also, as is seen in Fig. 2, a water input 25 is provided in the module 40 (in fact two are provided in the module 40 and one in the module 30) for introducing water into it by way of the pump 27 driven by the motor shaft (not illustrated). The reason for this is that the plug 23 relating to this unit comprises a water lead - and an air conductor - whereby all leads leading to the three-way instrument may connected via the plug 23. The air conductor transports air from a compressor means (not illustrated) positioned within the housing of module 30.

Naturally, the compressor means are also controlled by electronics positioned within the block 30.

The module 40 is a high power module for use in connection with instruments requiring a voltage higher than that provided by the module 20. Instruments such as those used in electro surgery or ultrasound cleaning of teeth require voltages in the vicinity of 25-30 V. In order to provide such voltages, a specific module has been provided for such instruments. The operation of these two types of instruments also requires water, whereby, as is the case with the module 30, two water pumps 27 are provided (one for each motor shaft 24) and water therefrom is pumped into the unit 40 and out through the plugs 23 provided therein. The operation of these instruments and the communication with the module 20 is taken care of electronic circuits positioned within the module 40.

In Fig. 2, two peristaltic pumps 27 are illustrated comprising a water reservoir (not illustrated) and from which a tube. is connected to the water inputs 25 in order to pump the water into the unit 40.

Also, in Fig. 1 a vacuum suction tank 28 is provided for suction of liquid from the patient's mouth. This tank and its suction pump (not illustrated) are appended (even though it is illustrated from the block 100) as a unit in a slot 22. The operation and control of this unit is exactly the same as that of the tools 12.

In the following, the actual operation of the apparatus 10 will be described in relation to the circuit diagrams in Fig.'s 4-11.

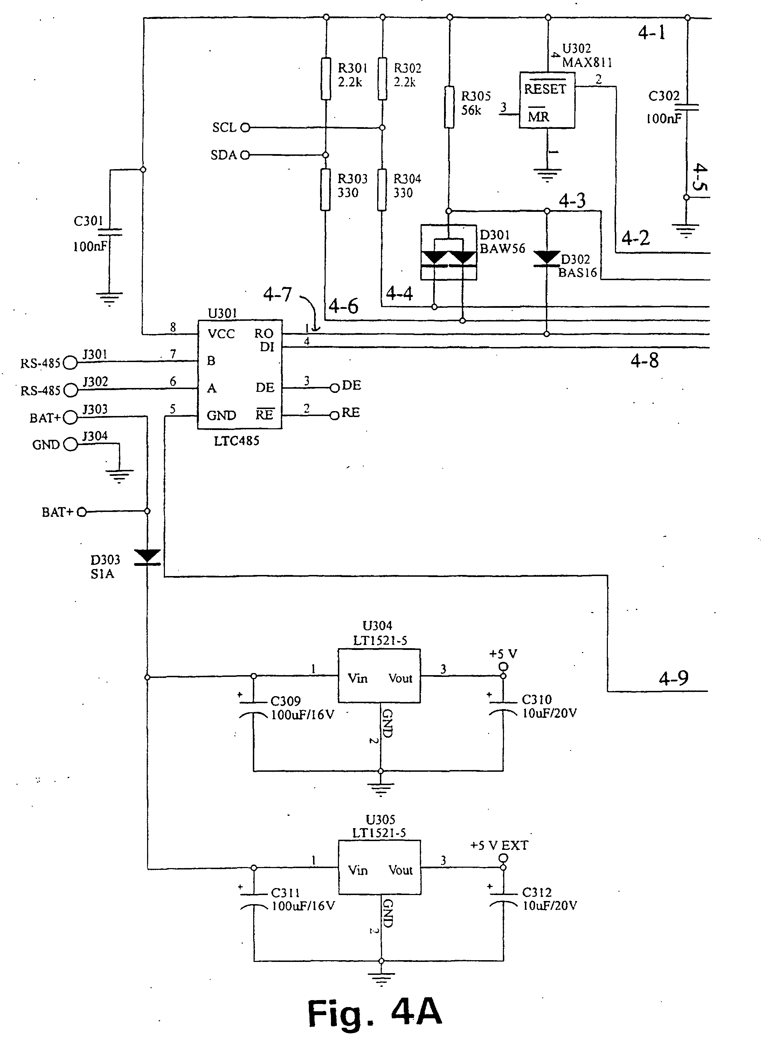

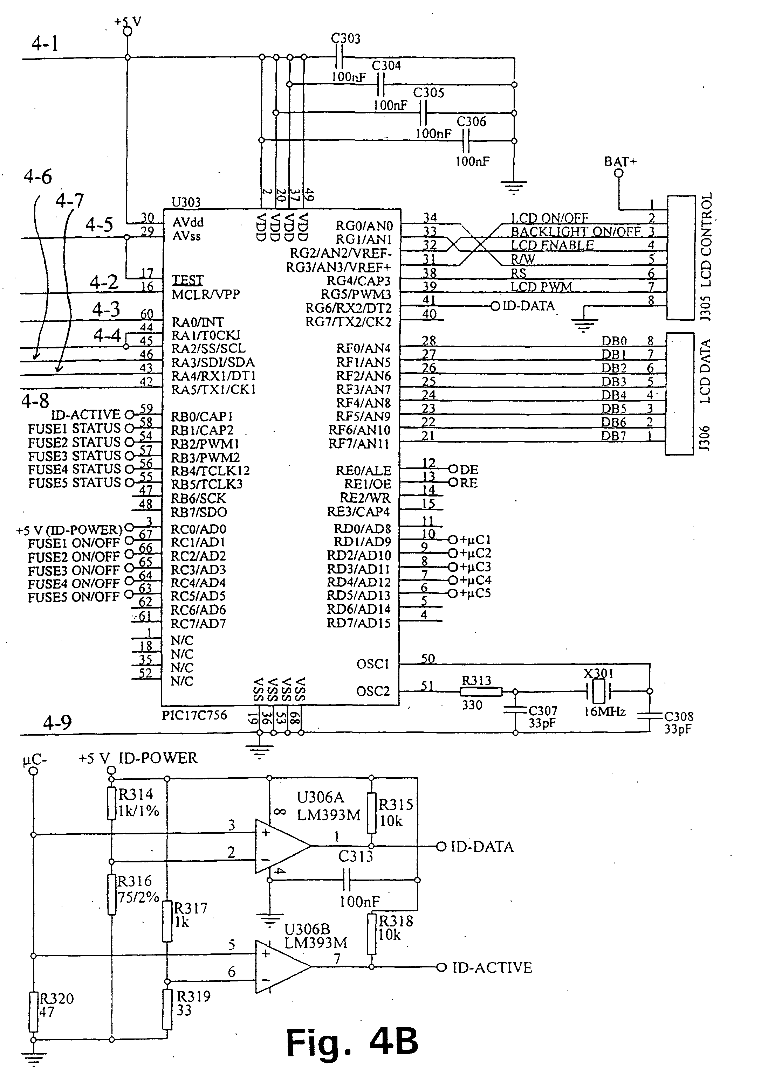

In Fig. 4, the circuit diagram of the safety module is shown. At the left side thereof, data and power are introduced from the module 50, which will be described further below.

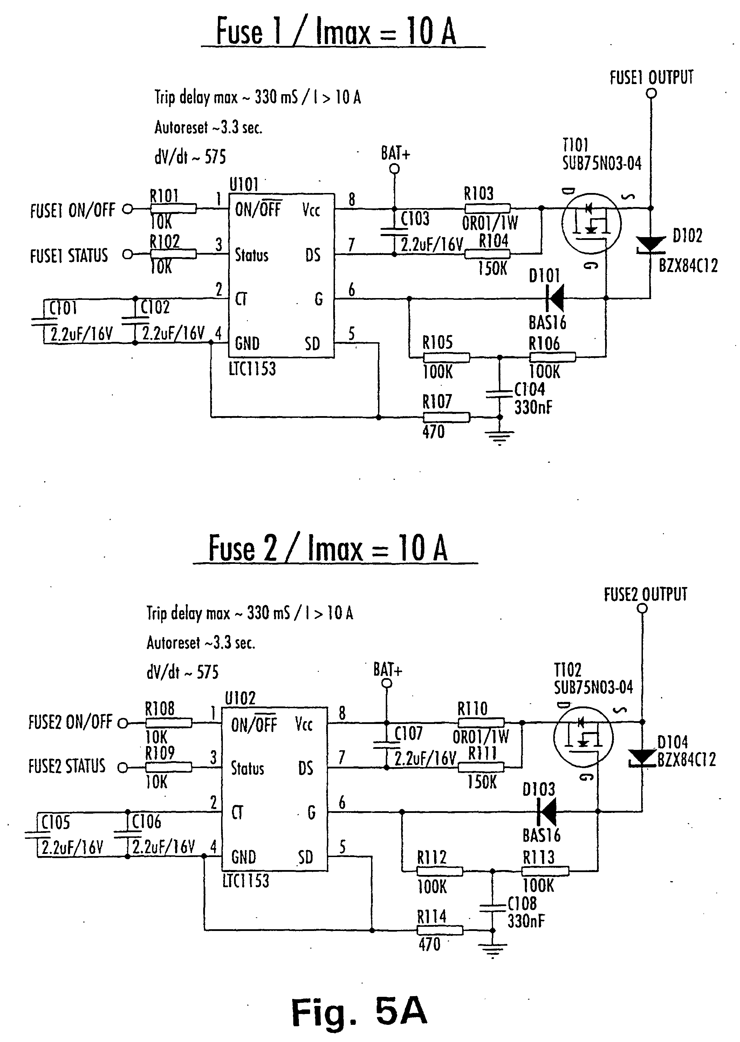

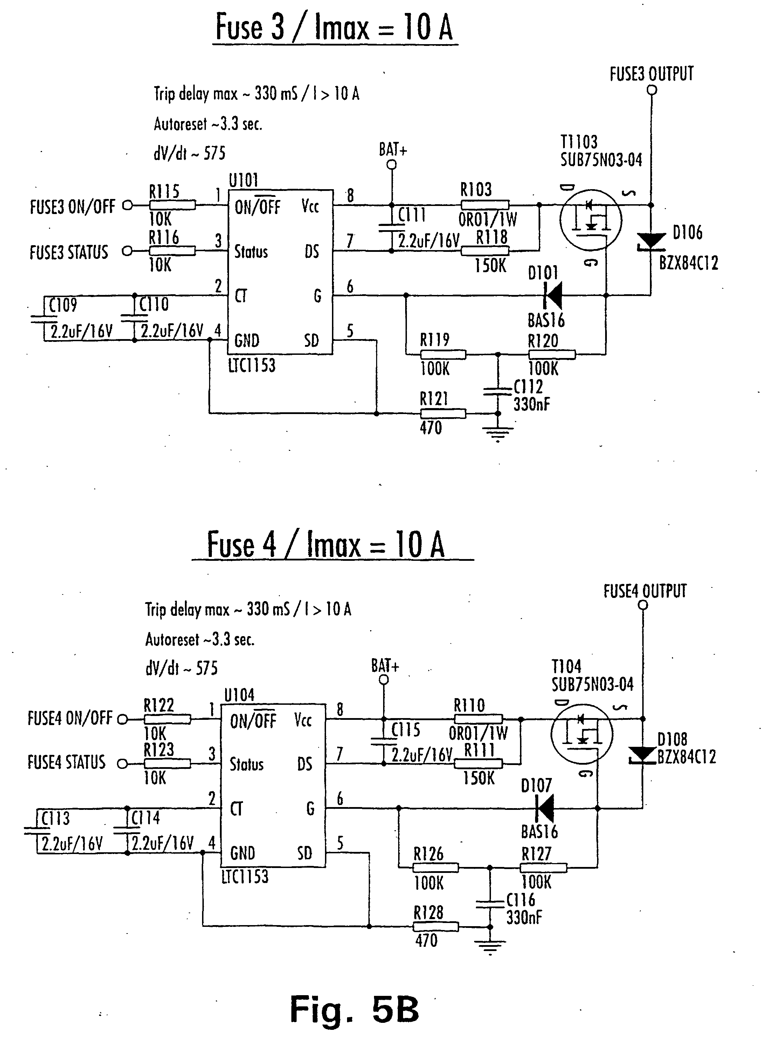

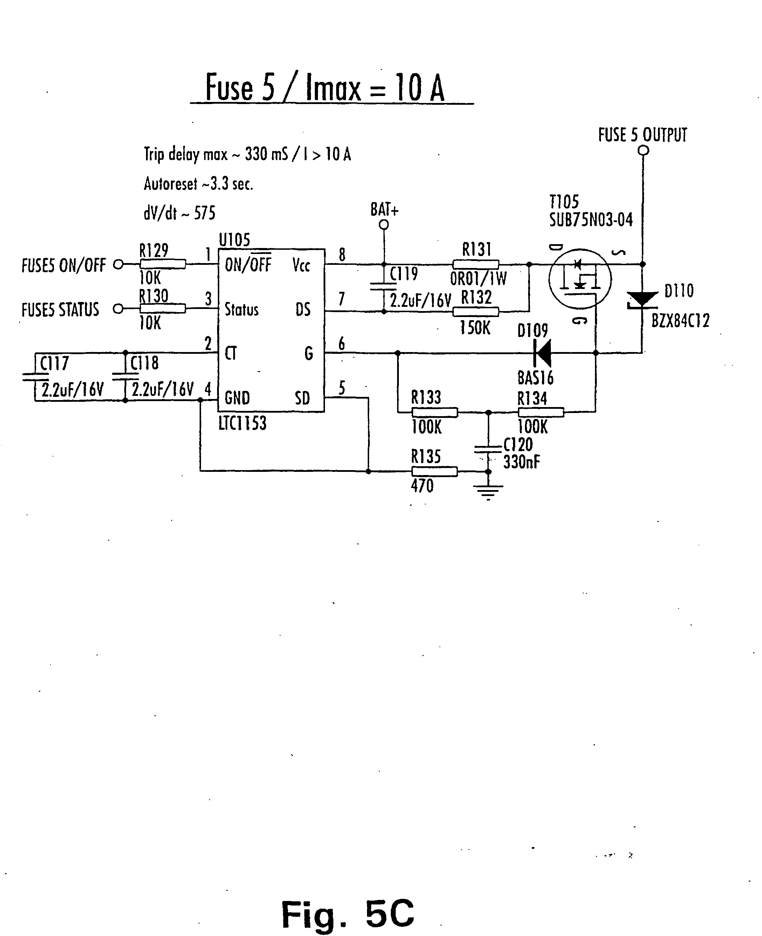

In the present simple embodiment, 5 outputs are provided (one for each slot 22) directly from the safety module 20 and each is controlled by a fuse circuit (see Fig. 5). In the present embodiment, the fuse circuits are all set to stop power feeding, if the consumption by a single tool exceeds 10A.

Status of the fuse circuits are transmitted from the fuse circuits to the main processor of Fig. 4, and this processor is able to control each fuse circuit in order to provide power or not (legs 55-58 and 63-67 of the main processor).

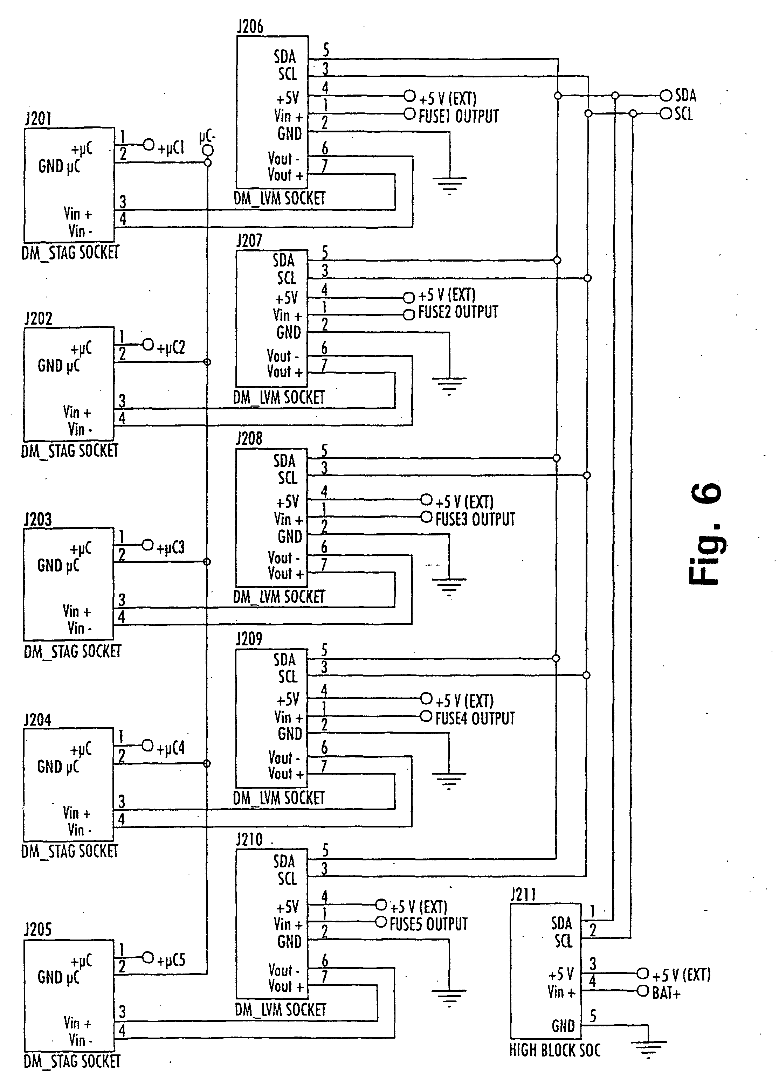

Fig. 6 illustrates the flow of power and information to the external units. On the right side, the serial communication (I²C communication) is provided to and from the main processor of the safety module 20. As is seen in Fig. 4, the simple circuit at the upper left converts this data before introduction to the main processor.

In Fig. 6, each block (J206-J210) represents the interconnection between a block 100 and the safety module 20. Into this block 100 flow the serial communication and the battery power, and out from it flows power (Vₒᵤₜ) adapted for the tool 12 served or controlled by the actual block 100. This power is provided to the actual tool (J201-J205) via the module 20. The communication power (+5V ext) to the blocks 100 is always on, but the main processor may cut of the power (Fuse 1-5 Output - via the fuse circuits) to the tool.

The communication between the safety module 20 and the individual tools 12 is separated from that taking place between the safety module 20 and the blocks 100.

The communication between the tools 12 and the safety module 20 is taken care of via the conductors (+µC1-+µC5 and µC-). Powering of the processor in the tools is taken care of by the same wires. By powering one of the lines +µC1-+µC5, the main processor determines which tool 12 with which it wishes to communicate.

In the actual embodiment, the control of which one of the blocks 100 is communicating with the main processor is managed via software.

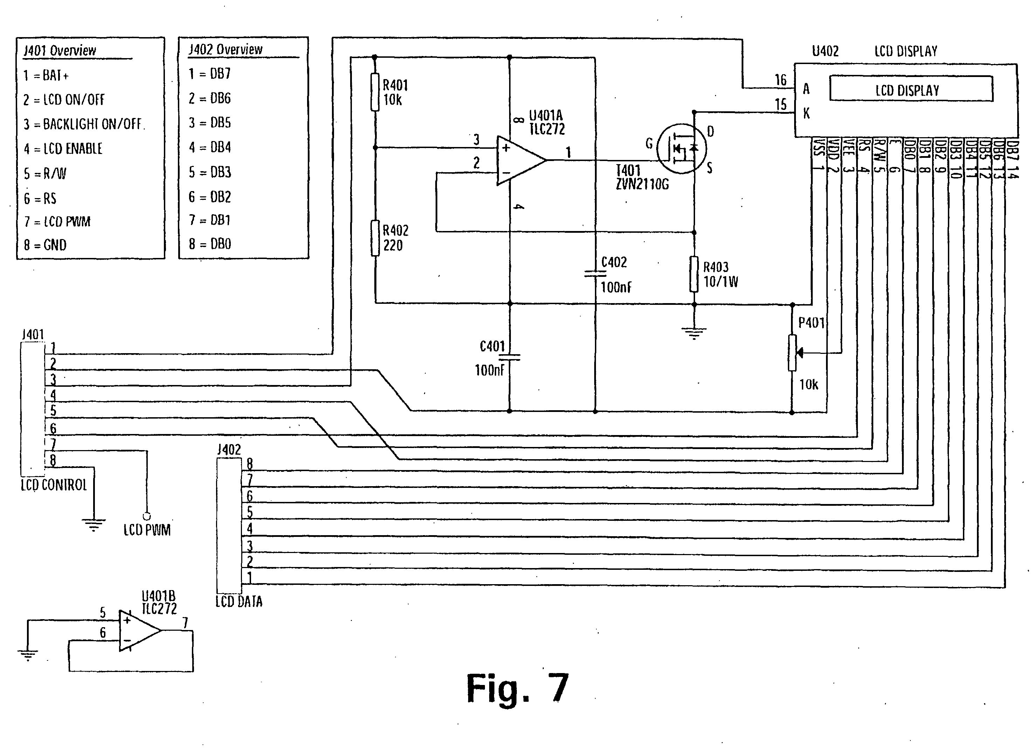

In Fig. 7, the electronic circuit relating to the LCD 21 is illustrated. This is standard for use in connection with LCD's where a constant background illumination is desired.

Thus, when a block 100 and a tool 12 are connected to the safety module 20, the main processor communicates with these two parts and determines whether they can interact. Also, in that connection the main processor may determine how much power the tool 12 requires during operation and the combination of pedal signals (see below) required for operating the tool 12. When the tool 12 requests power, the safety module 20 will determine whether this would be allowed on the basis of the actually consumed power (by other tools 12 - or the power-consuming motors etc. in the modules 30 and 40). If sufficient power is available, the fuse circuit relating to the tool 12 is opened. If not - it is not. If the operator then wishes the tool to be operated, another tool should be turned of.

Whether a tool 12 and a block 100 are compatible will relate to the power required by the tool 12 and that which the block 100 can handle - as well as the voltage requirements and providing capabilities of the two parts. This will be determinable by the main processor. If the two parts are not compatible, no power will be provided to the tool 12 under any circumstances.

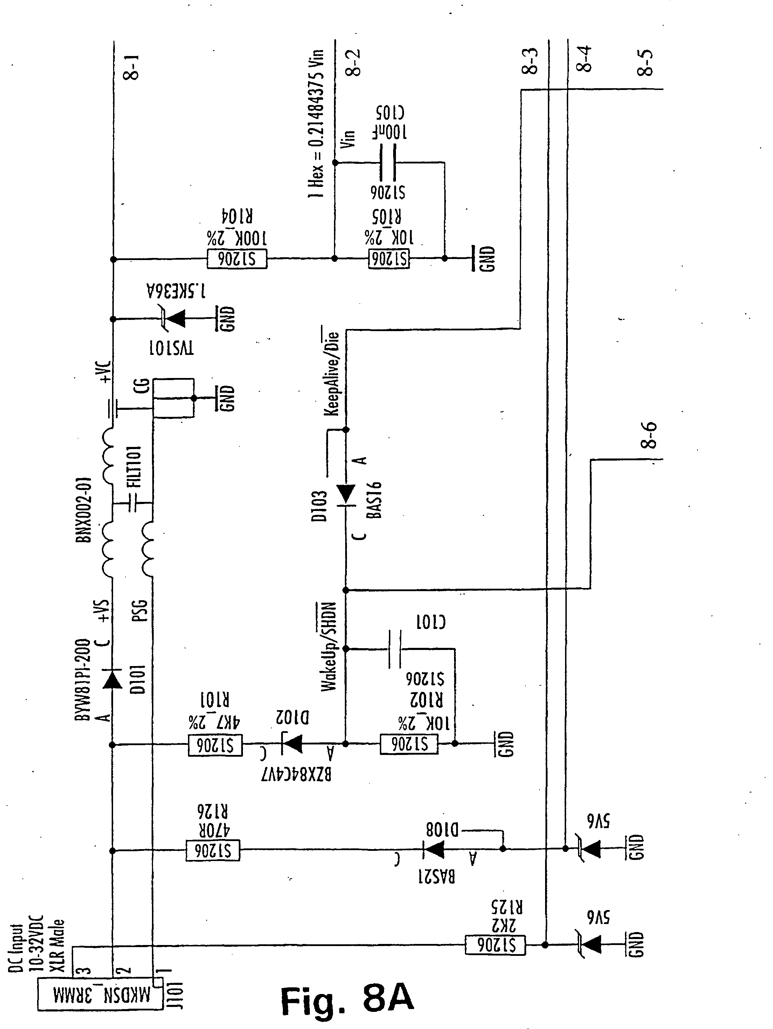

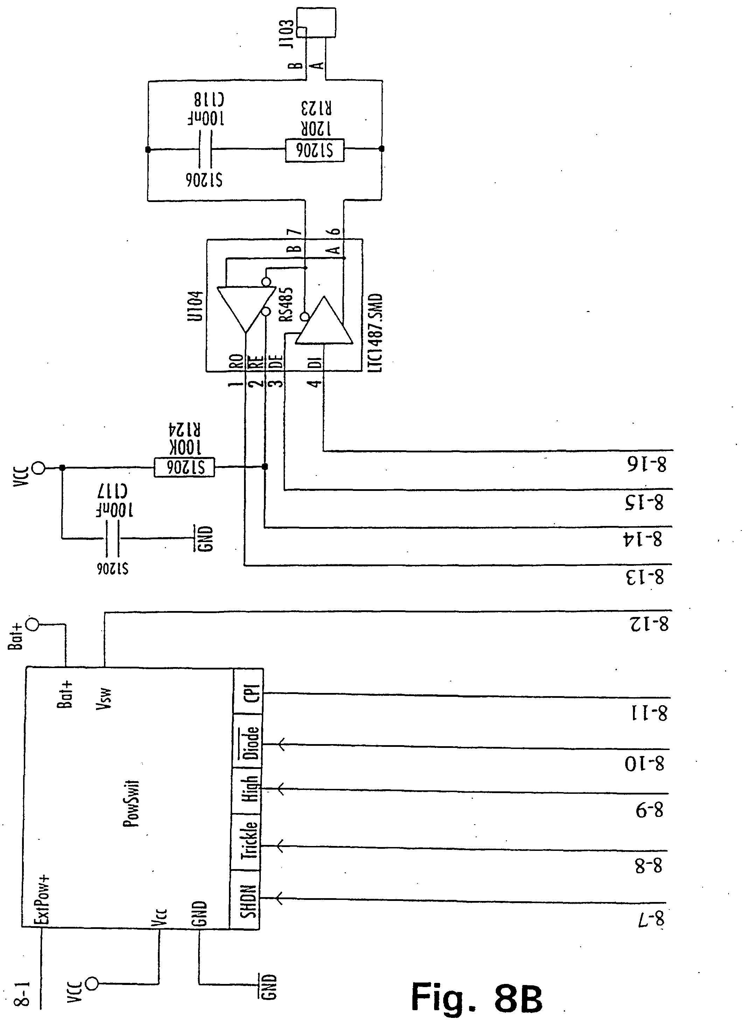

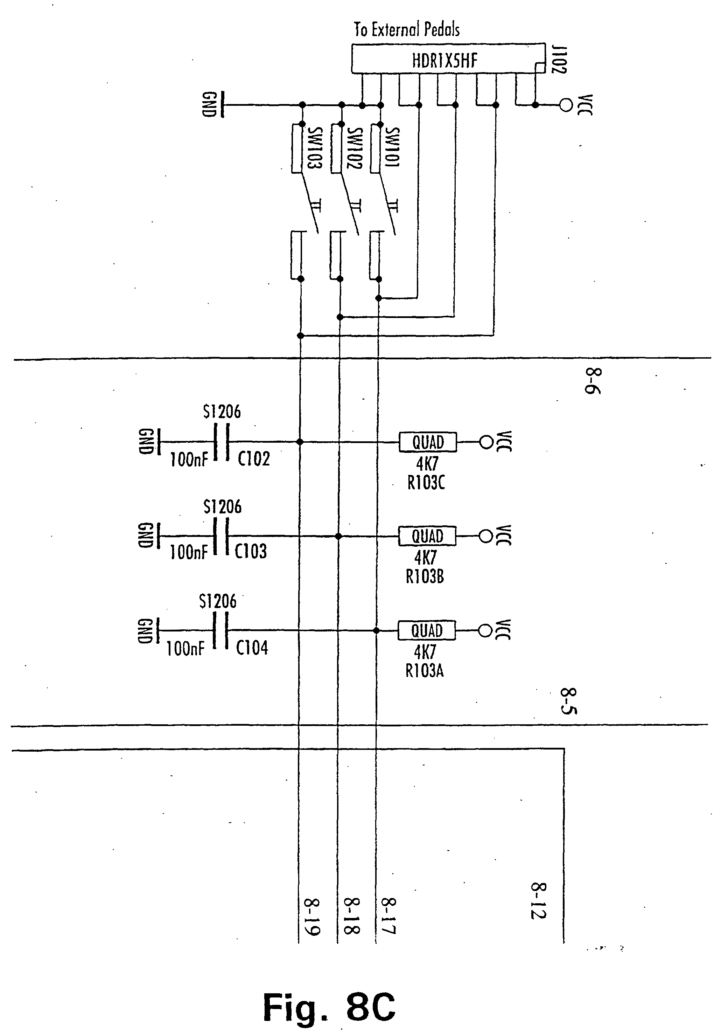

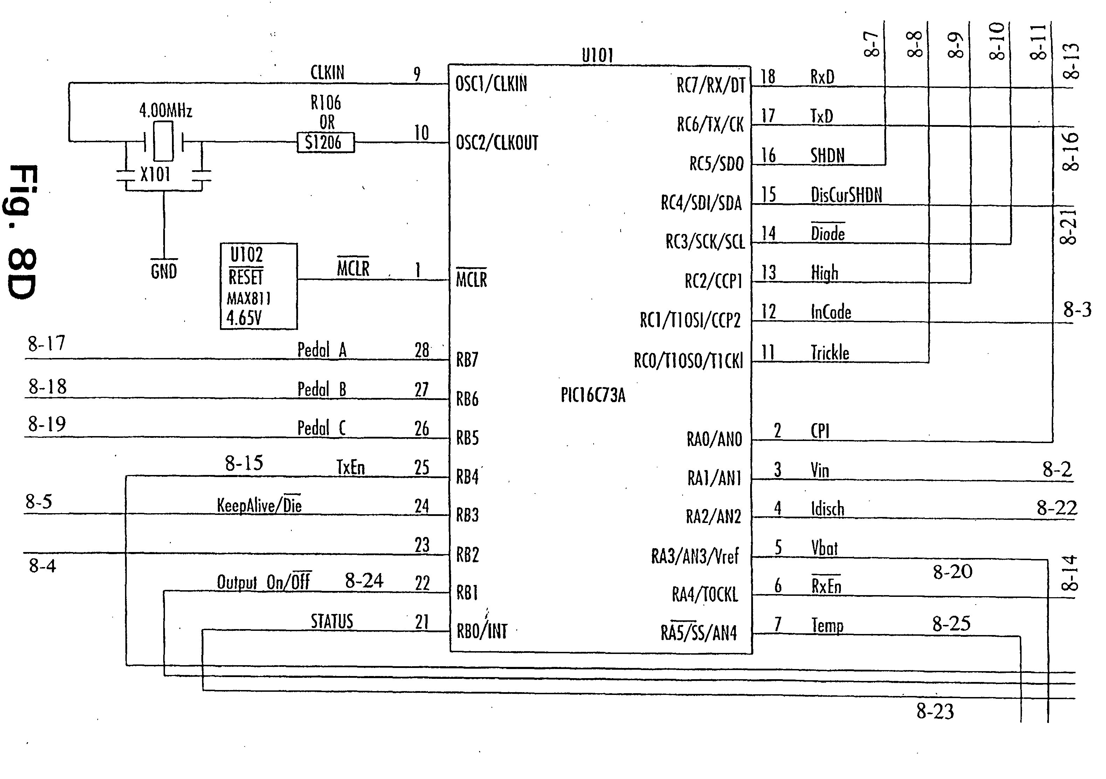

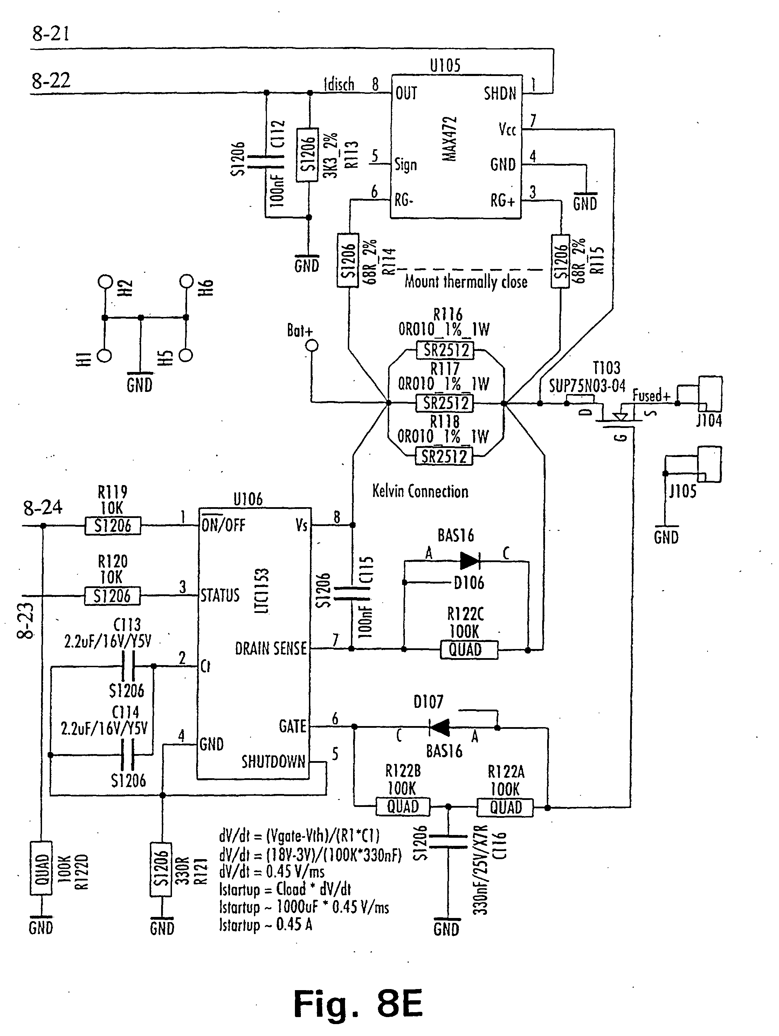

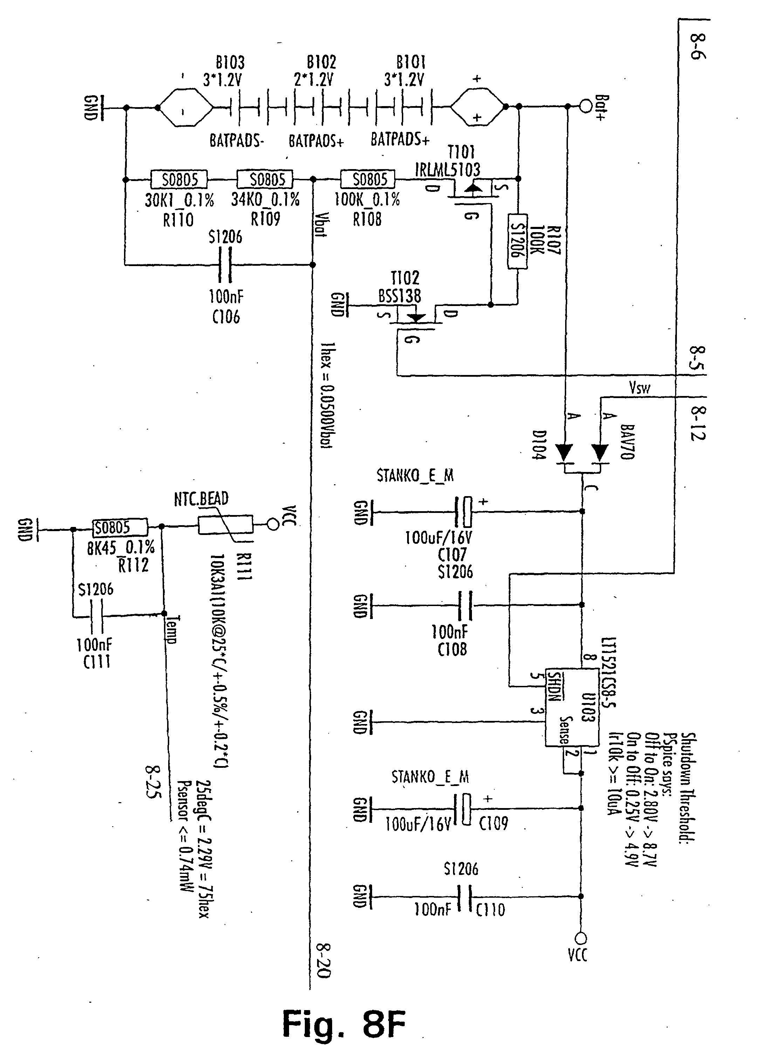

In Fig.'s 8 and 9, the circuits controlling the charging and discharging of the battery in the module 50 are illustrated. The communication between the modules 20 and 50 takes place via RS485, and this communication enters Fig. 8 at the upper right. The lower right of Fig. 8 is a current measuring circuit which provides information for use in the processor of Fig. 8 and the main processor of the safety module 20 in order for it to evaluate the presently consumed power.

At the middle left, the inputs are seen from the three pedals 51 provided in the module 50. This information is handled by the processor of Fig. 8 and is forwarded via the RS485 communication to the main processor.

The presently preferred "coding" of the pedal information in order to control different tools 12 may be seen in the Applicants co-pending PCT application filed on even date and claiming the same priority.

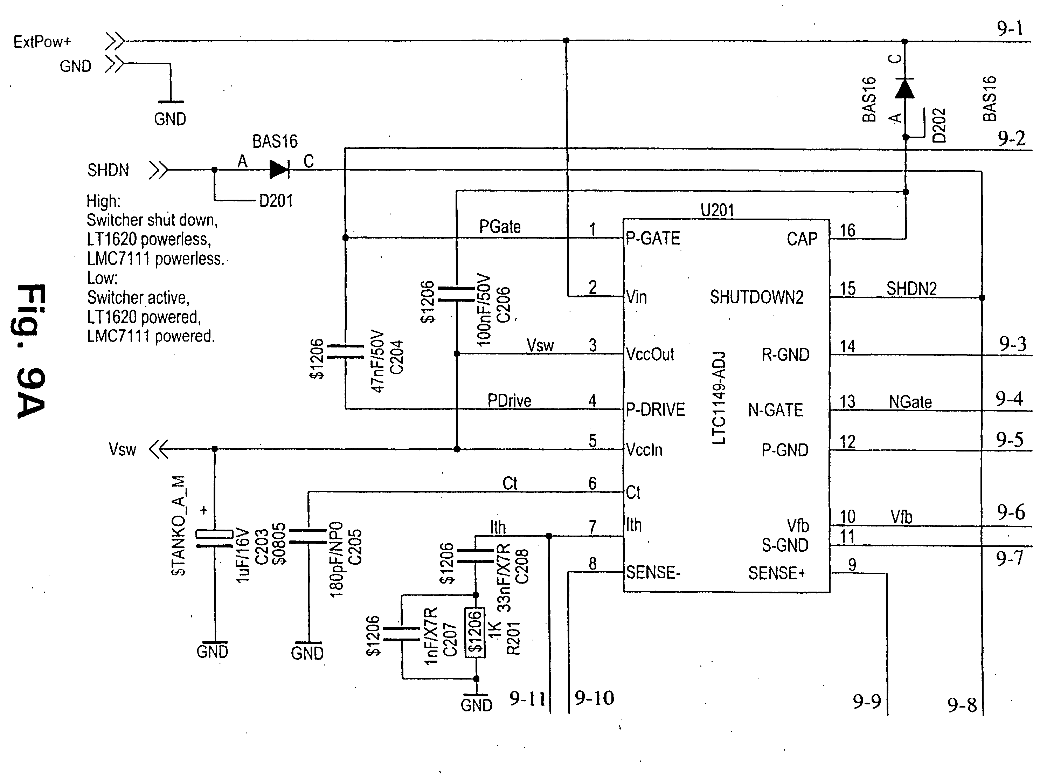

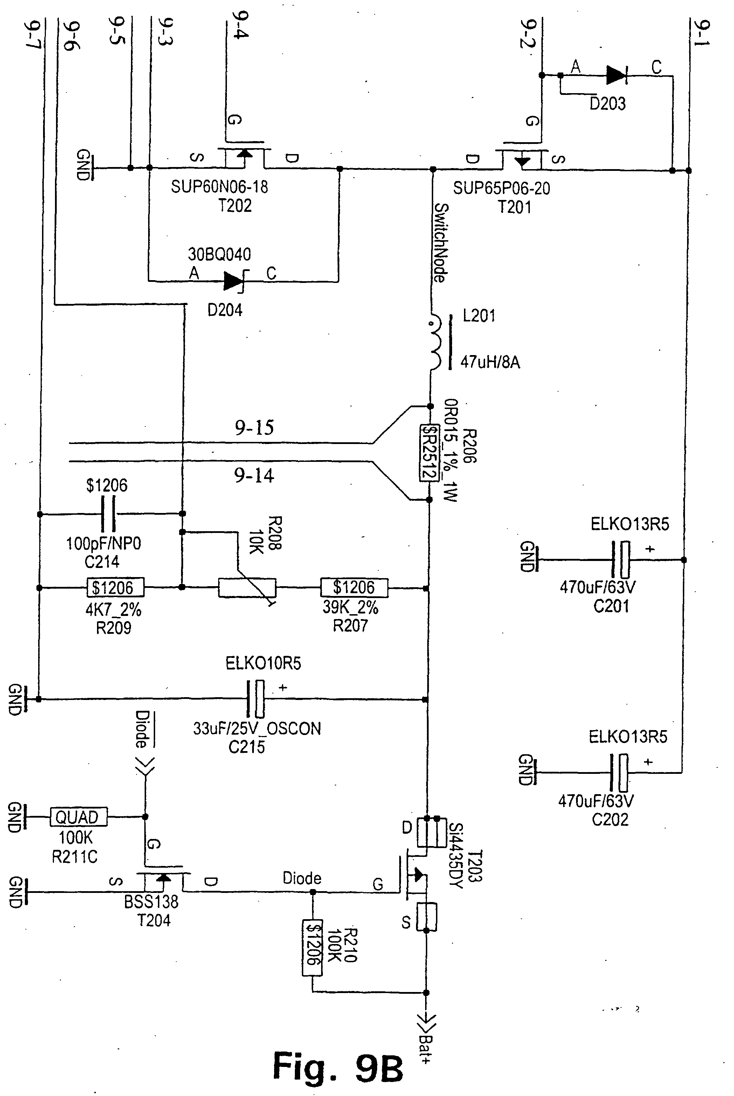

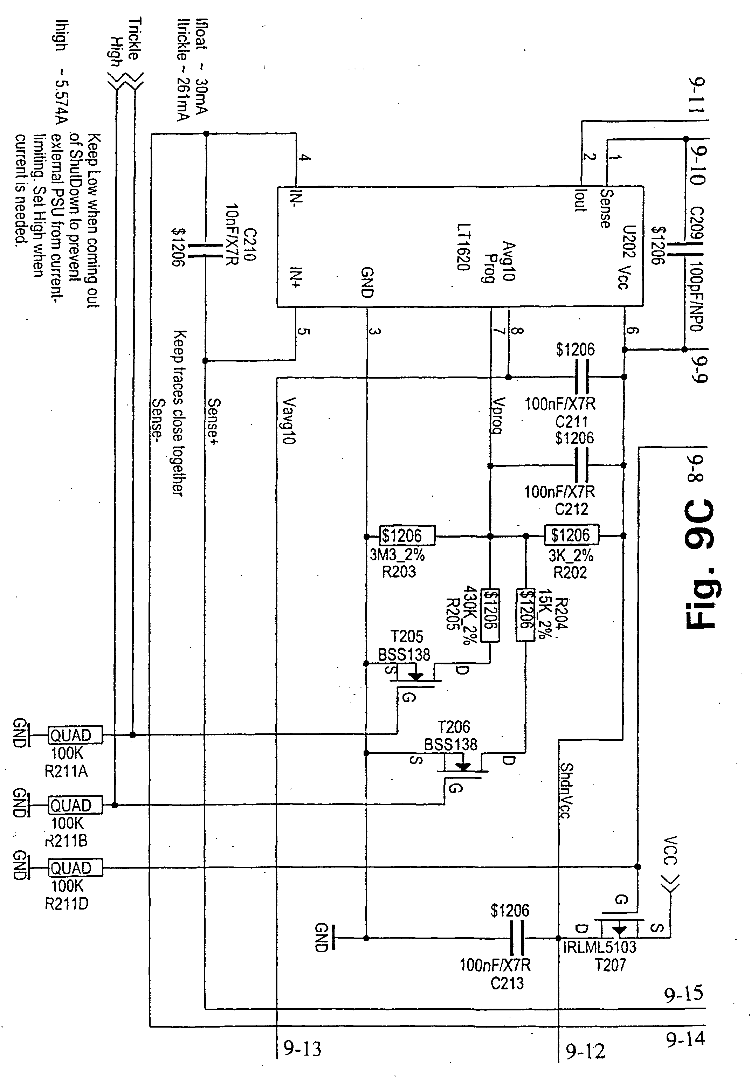

At the upper left, the power input is seen for recharging the battery. Presently, it is preferred to charge the battery using a low voltage DC supply. However, in certain applications, it would be more applicable to use an external supply. This power is introduced into the "PowSwit" circuit, which is illustrated in Fig. 9. This circuit is a standard circuit for charging a rechargeable battery.

As is described above, especially when using instruments 12 for electro surgery, it is important to ensure that the instrument is solely driven by batteries. Therefore, a special purpose plug (not illustrated) is provided, the presence of which may be sensed by the apparatus.

In the present embodiment, this plug is inserted into that plug which normally would receive a power supply cable. This plug comprises three conductors, "1", "2" and "3", where "1" and "2" are used for receiving the power. The present preventing plug comprises a processor which, when the plug is inserted, is powered by "2", where "1" is ground, and where "3" is used for communication between this processor and the PIC16C73A processor in Fig. 8. When communication can take place between these two processors, the plug is in place and the apparatus is solely battery powered. This information may be transmitted from the P1C16C73A processor to the main processor, which takes this information into account when providing power to the instrument for use in electro surgery.

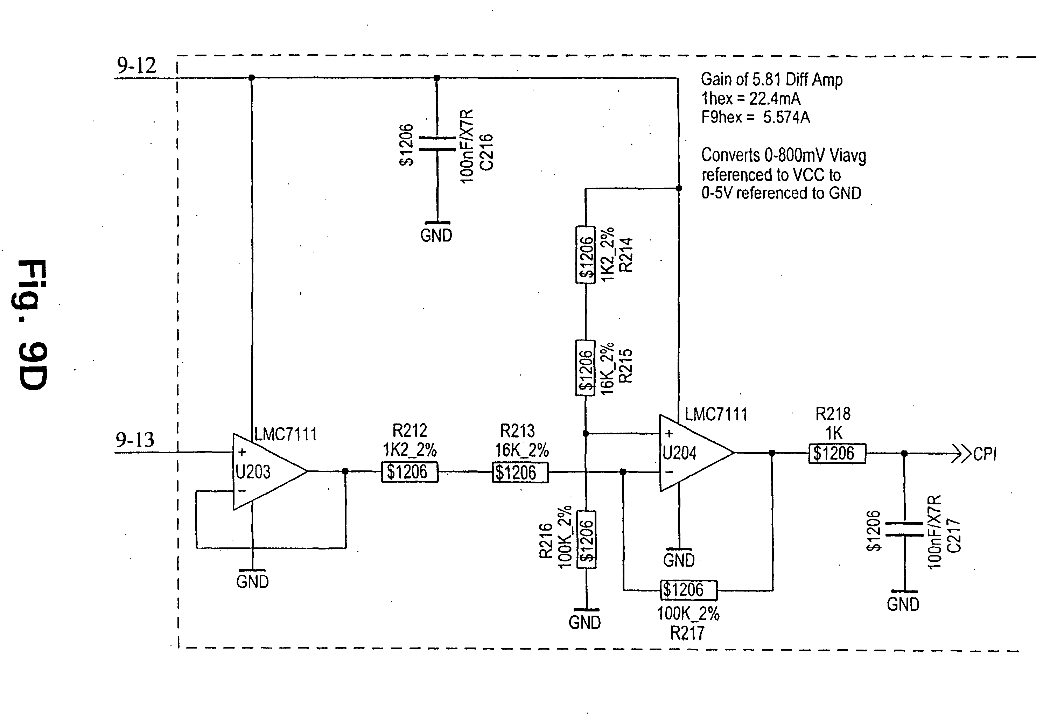

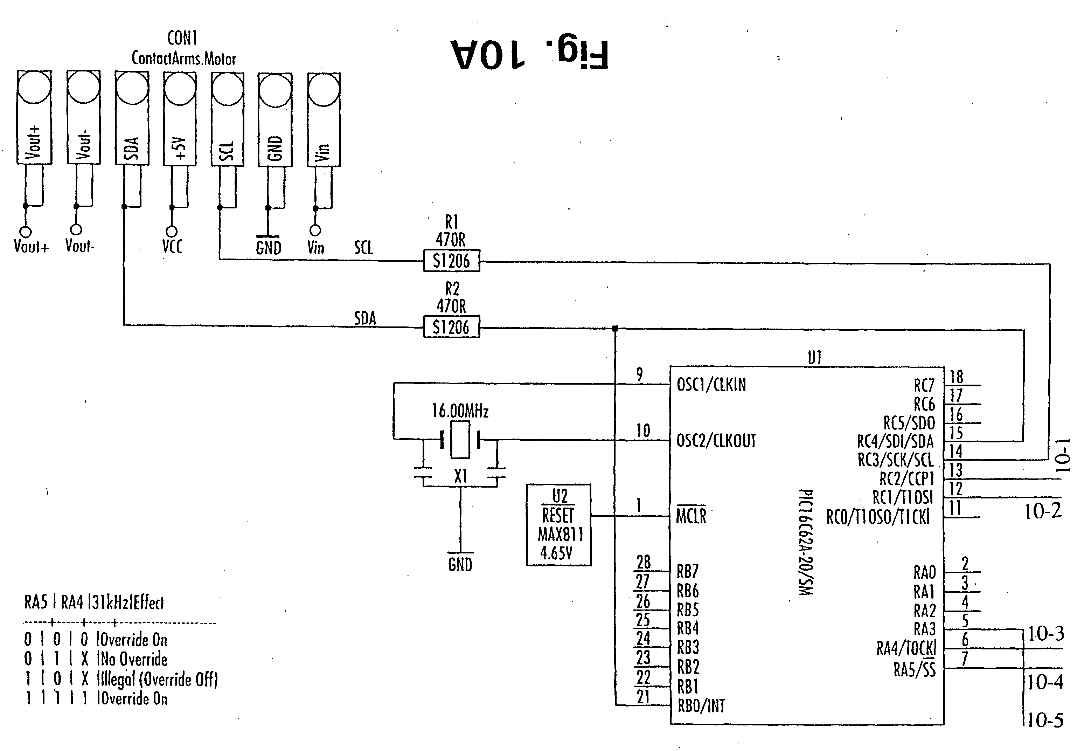

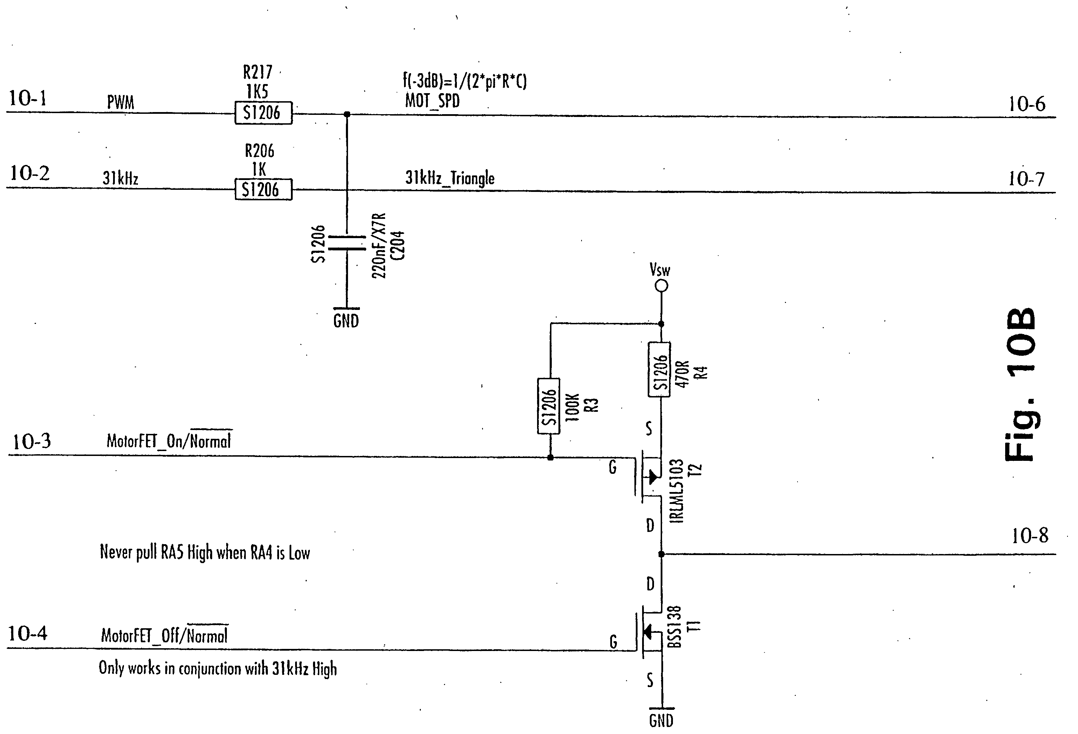

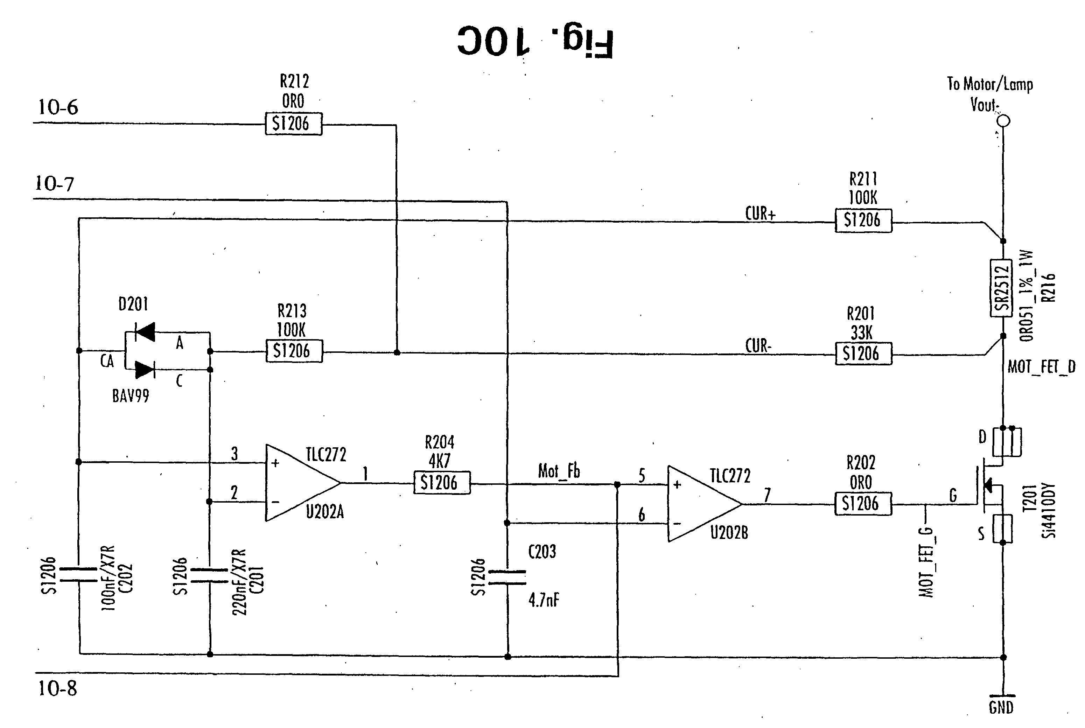

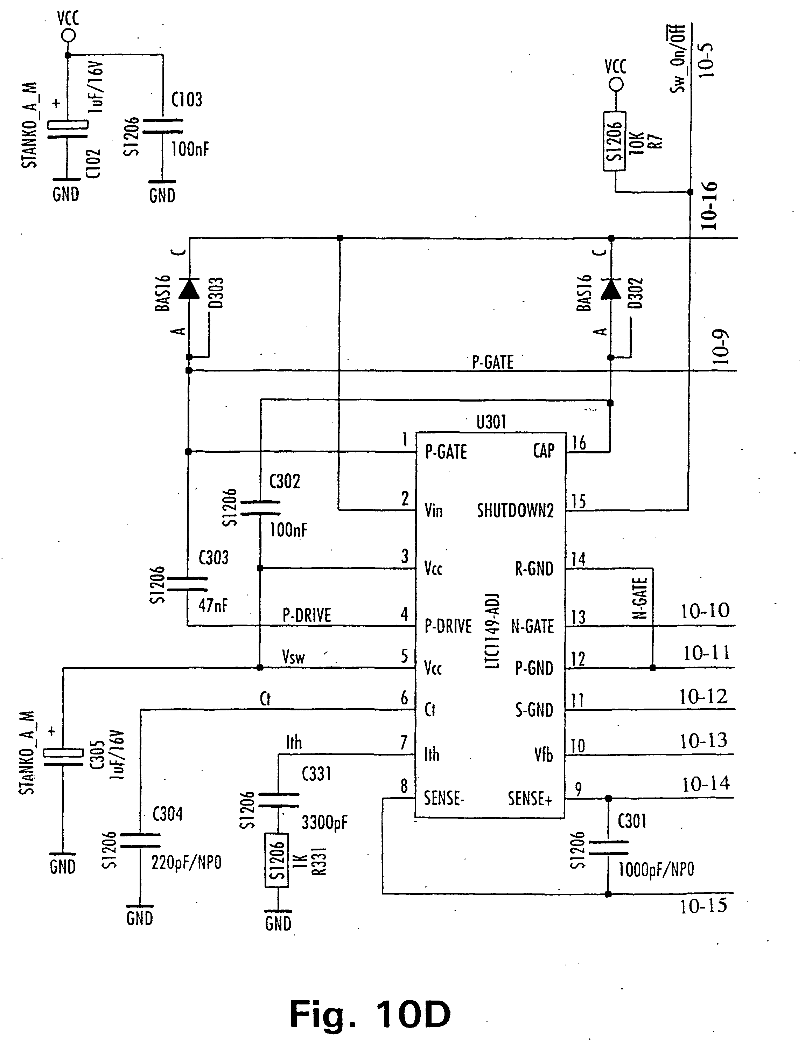

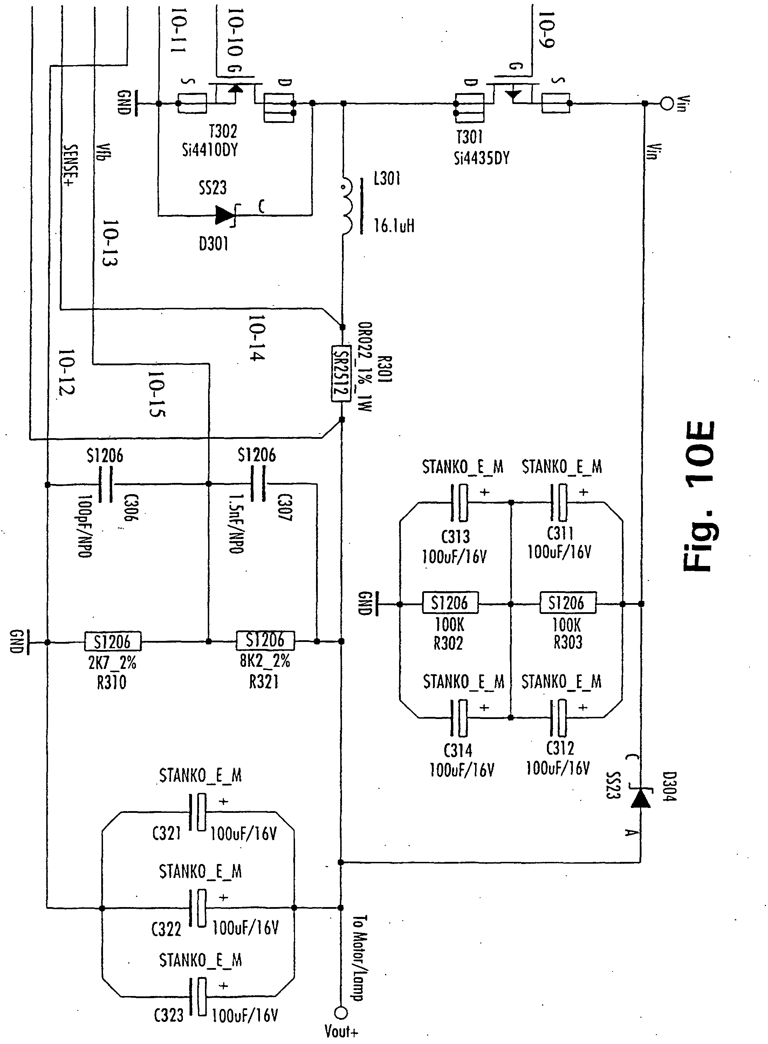

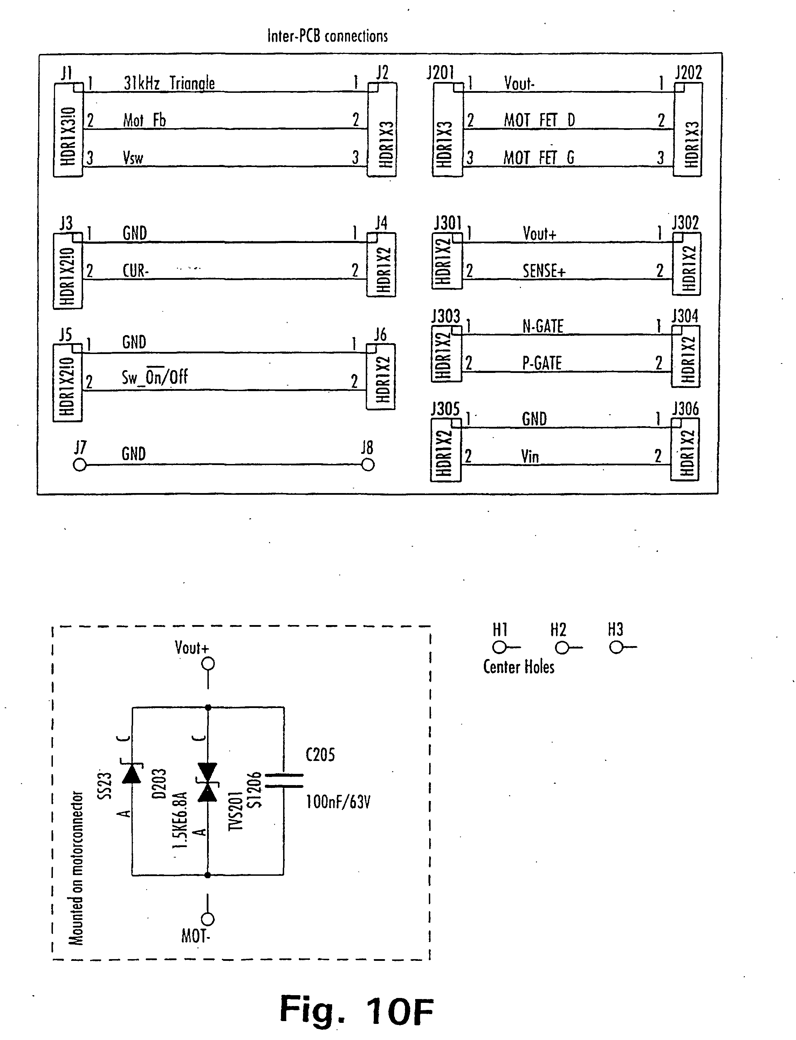

In Fig. 10, the circuitry for use in a block 100 for providing power and control to a motor is illustrated. In this figure, the information and power from the safety module 20 is provided at the upper left. The lower part of the figure is a highly efficient 5V-power supply, and at the upper right, the voltage is regulated in order to have the motor run at a constant speed. If this speed is to be altered, information to that effect will be entered via a pedal 51, interpreted by the main processor and information to that effect be relayed to the processor of Fig. 10, which again regulates the voltage by regulating the circuit at the upper right. Motors of this type may be provided in the modules 30 or 40 or in the tools 12, such as in a drill.

The power provided by this block 100 is provided to the motor of the tool 12 via the module 20.

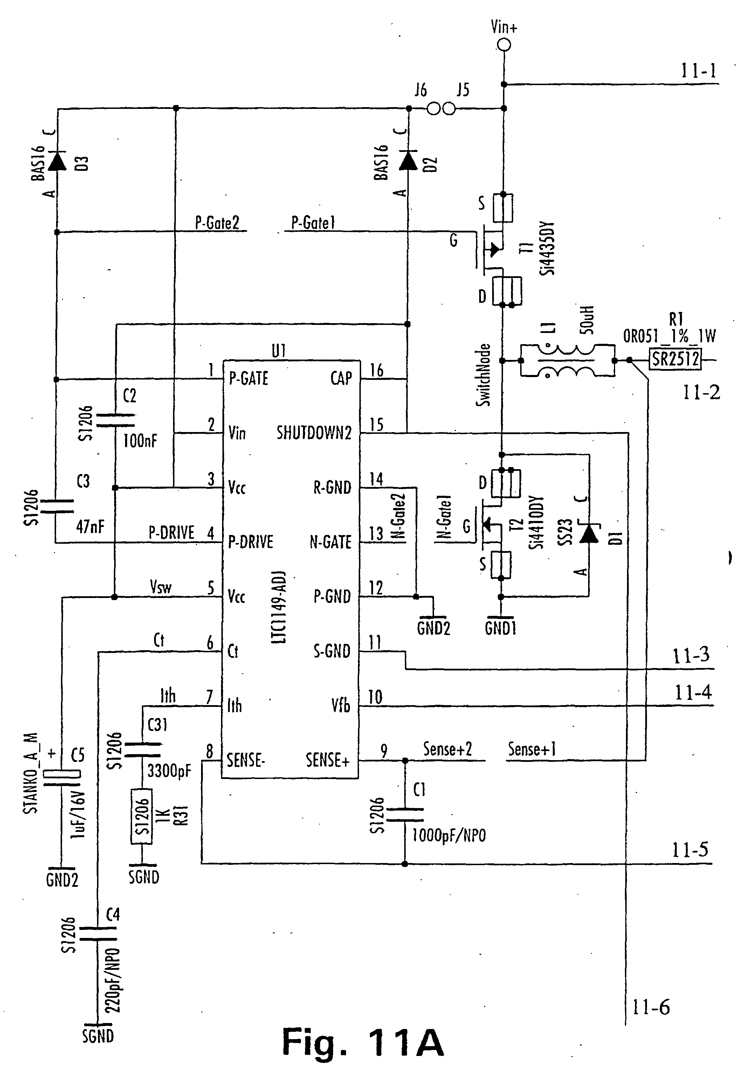

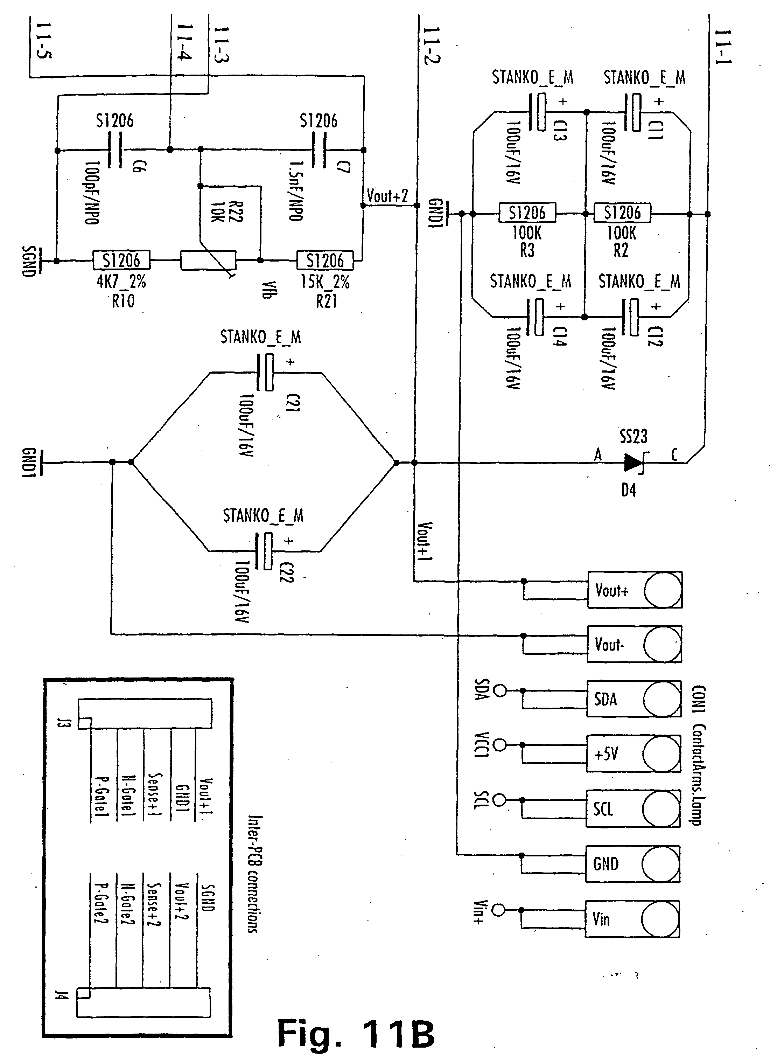

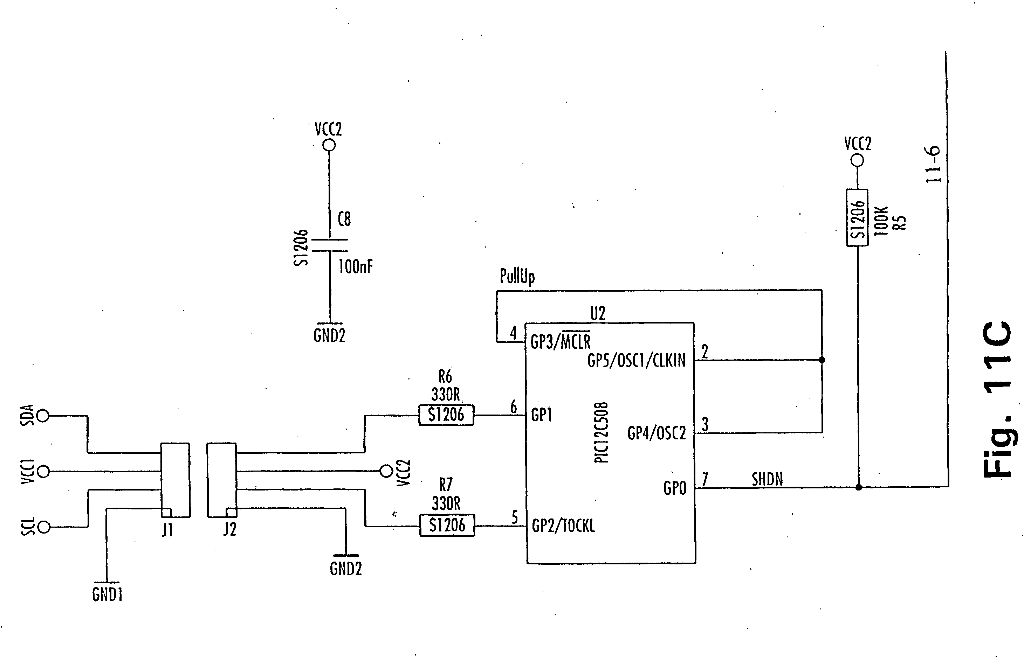

In Fig. 11, the circuitry for use in a block 100 for providing power to a lamp is illustrated. In this figure, the information and power from the safety module 20 is provided at the upper right. The remaining is a standard switch mode power supply, which is controlled by the variable resistor R22. When this resistor has been set to the correct value (typically 2,5V), the PIC12C508 processor is processed in order to "know" the setting of the resistor.

The skilled person will easily be able to set up the communication between the individual processors. Due to the large number of processors, the communication and action taken care of by a number of the external processors (those in the blocks 100, tools 12, and modules 30, 40, and 50) is quite simple. The information required from a tool 12 will relate to the power and voltage requirements, and maybe its identity in order to ensure that the tool 12 will observe the protocol and coding used.

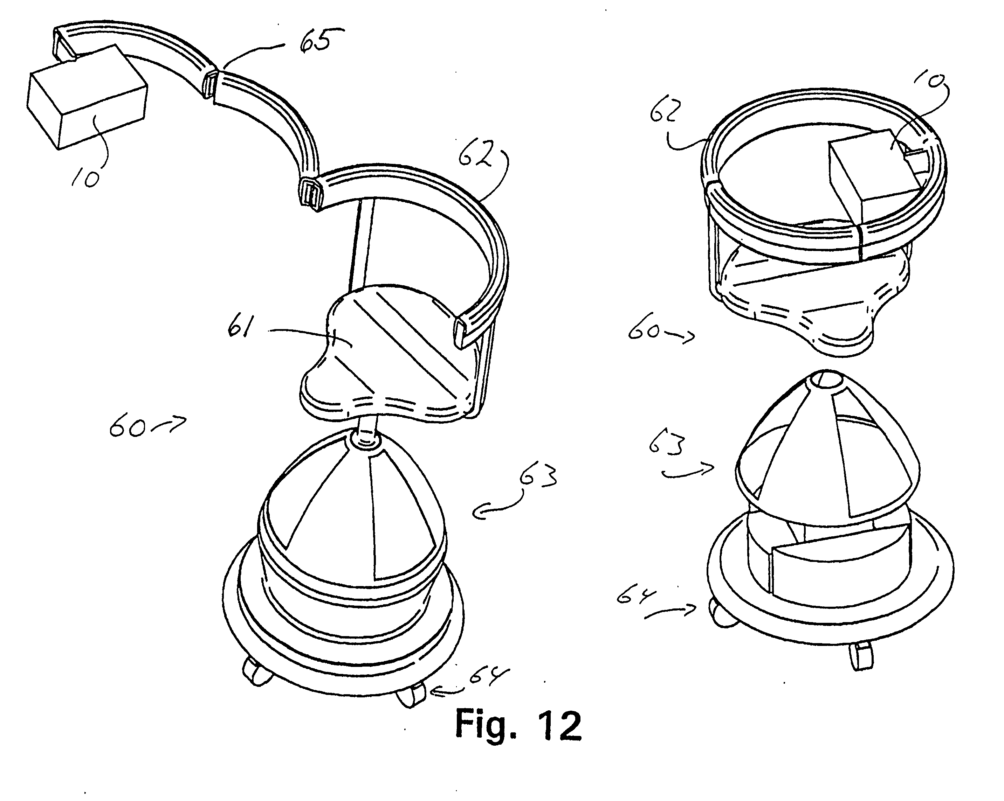

In Fig. 12, a chair 60 for the dentist to sit on illustrates the second aspect of the invention. The chair has a seat 61, a back 62, a base 63 comprising wheels 64 and a part 65 comprising an apparatus 10 as that described in relation to Fig.'s 1-11. The part 65 comprises two elements having the shape of parts of a circle, and when in a closed position (the right part of Fig. 12), the back 62 and these two elements substantially form a circle wherein the apparatus 10 is positioned.

In the open position shown in the left part of Fig. 12, the dentist may sit on the seat 61 and use the apparatus 10 in the treatment of the patient's teeth.

In the closed position, the chair 60 is in a storing position where the apparatus 10 is protected against e.g. shock during moving, transportation or storage thereof.

In this preferred embodiment, the base 63 may hold the battery of the module 50 - or an additional battery for prolonging the active working period of the apparatus 10. Also, the chair 60 comprises a waste container instead of the vacuum suction tank 28 - or in addition thereto - also for prolonging the period of time required between bringing the chair 60 out of operation. Also, an additional water supply may be provided in the base 63 for the same reasons.

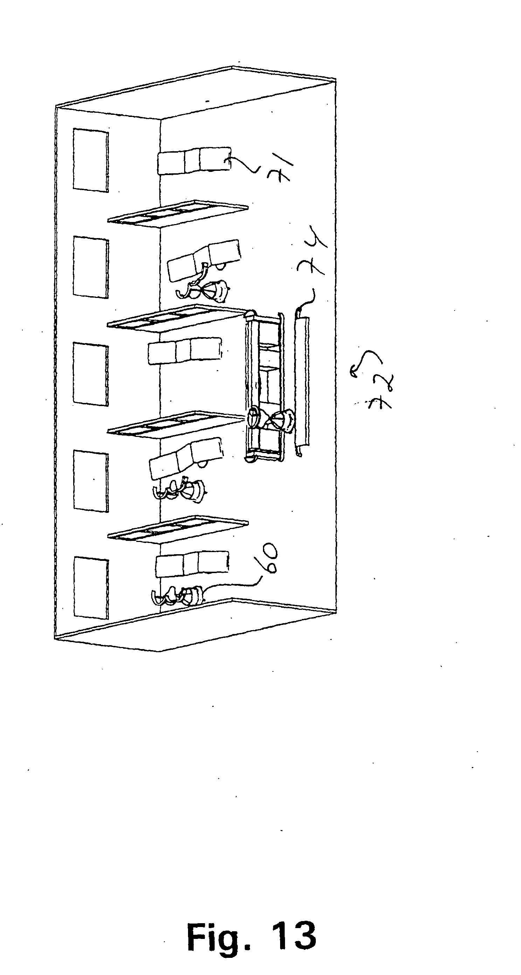

Now, as both power and water may be provided by the apparatus or the base 63, and when waste may be held thereby, it is seen that the chair 60 is self-contained, which gives a number of advantages which are best seen in connection with Fig. 13.

In Fig. 13 it may be seen that having provided the apparatus 10 and the chair 60, a dental clinic may be made much cheaper and easy to maintain.

The dental clinic of Fig. 13 comprises a number of patient's seats or beds 71 in addition to the chairs 60. As the chairs may be self-contained, the clinic does not need lines for providing power, water, and pressurised air to each apparatus. Nor does it need lines for removing waste from the apparatus. This greatly decreases the costs relating to setting up a dental clinic.

Also, due to the mobility of the chair 60, a large reduction in the cost in running a dental clinic is seen in that different chairs may be equipped with different equipment. Normally, today each apparatus fixed beside each patient's bed will be equipped to handle both simple and complicated treatments. However, it will be quite seldom that the equipment for the complex treatments is in use.

Using the present invention, one chair 60 may be equipped for the complex treatments and other chairs 60 for other or more simple treatments. In this manner, the overall cost in financing the equipment will be reduced. As the chairs 60 are mobile, a mobile chair 60 may be moved to the patient who requires this treatment.

Also, an interesting aspect may be one where a chair 60 is provided not only for the dentist but where a chair 60 is also provided for his/her assistant. This chair 60 may be provided only with e.g. suction, whereby this very simple chair 60 may be used in relation to patients who have received their treatment and where e.g. a filling is drying. This again optimises the use of the equipment, as the chair 60 holding the complicated equipment may subsequently be moved to a new patient requiring treatment therewith.

The clinic also has an area 72 to which the chair 60 is brought after the treatment. At this position, the parts of the apparatus 10 on the chair 60 requiring cleansing or replacement will be cleansed or replaced. Also, the battery of the chair 60 or apparatus 10 may be recharged if required. An especially interesting embodiment is one wherein the base 63 of the chair 60 comprises a number of electrical conductors (not illustrated) for contacting power supplying rails 74 at the area 72. The chair 60 will then automatically be recharged when positioned between these rails 74.

When using these rails 74, a standard plug is not required in order to recharge the battery of the module 50 or the chair 60. In that situation, the above-mentioned preventing plug would either be shaped as a covering means covering the part of the base 63 having the electrical conductors or it is not required at all, as the area 72 may be positioned so remote from the patient's beds 71 that recharging cannot take place while using the chair 60 for electrical surgery. In that manner, the distance between the locations may be enough for ensuring battery operation of the apparatus 10.

## Claims

1. An apparatus for controlling and power feeding a number of power consuming parts, the apparatus comprising:
- a plurality of external units (100, 12, J201-210) each comprising a power consuming part (12, J201-205), and
- a safety module (20),
each external unit (100, 12, J201-210) comprising means for transmitting to the safety unit information relating to the power required or desired by the power consuming part (12, J201-205) of the external unit (100, 12, J201-210) during a present or future operation thereof,
the safety module (20) comprising:
- means for receiving the information transmitted from the external units (100, 12, J201-210) for evaluating or determining on the basis of the information, the power required by the power consuming parts (12, J201-205) of the plurality of external units (100, 12, J201-210),
- means for comparing this required power to a maximum power consumption limit and for outputting a result of the comparison,
- means for receiving the result from the comparing means and for on the basis thereof determining the power which the power consuming part (12, J201-205) of each external unit (100, 12, J201-210) is to be provided with,
- means for receiving power from a power source (50),
- first means for providing power to the transmitting means of the plurality of external unit (100, 12, J201-210), and
- second means (Fig. 5) for providing the determined power to the power consuming part (12, J201-205) of each external unit (100, 12, J201-210), the second providing means being controllable by the receiving and determining means,
wherein at least one external unit (100, 12, J201-210) comprises means for determining the power required or desired by the power consuming part (12, J201-205) during operation thereof **characterised in that** the transmitting means and the power consuming part (12, J201-205) are detachably interconnected, the determining means of the external unit (100, 12, J201-210) being at least substantially fixedly interconnected to the power consuming part (12, J201-205).

2. An apparatus according to claim 1, wherein the receiving and determining means are adapted to determine an amount of power actually consumed by the power consuming part (12, J201-205) of an external unit (100, 12, J201-210) and to compare this amount to one or more maximum power limits.

3. An apparatus according to claim 2, wherein the receiving and determining means are adapted to have the second providing means (Fig. 5) reduce the power supplied to a power consuming part (12, J201-205), if the power consumed thereby exceeds a maximum power limit.

4. An apparatus according to any of the preceding claims, further comprising display means (21) for providing information to an operator of the apparatus.

5. An apparatus according to any of the preceding claims, wherein the receiving and determining means of the safety module (20) is adapted to, when receiving information from an external unit (100, 12, J201-210) desiring or requiring power, determine that
- if the result output by the comparing means means that the power required by the power consuming parts (12, J201-205) of the plurality of external units (100, 12, J201-210) equals or is less than the maximum power consumption limit, the desired or required power is provided to the power consuming part (12, J201-205) of the external unit (100, 12, J201-210), and
- if the result output by the comparing means means that the power required by the power consuming parts (12, J201-205) of the plurality of external units (100, 12, J201-210) exceeds the maximum power consumption limit, no power is provided to the power consuming part (12, J201-205) of the external unit (100, 12 J201-210).

6. An apparatus according to any of the preceding claims, further comprising means for holding information relating to a list of priorities relating to the relative importance of the operation of the power requiring parts (12, J201-205) of the external units (100, 12, J201-210).

7. An apparatus according to claim 6, wherein at least one of the external units (100, 12, J201-210) comprises means for holding and transmitting information to the safety module (20), the information relating to the importance of the operation of the power consuming part (12, J201-205) of the external unit (100, 12, J201-210).

8. An apparatus according to claim 7, wherein the holding and transmitting means is positioned at the power consuming part (12, J201-205) of the external unit (100, 12, J201-210).

9. An apparatus according to claim 6, wherein the receiving and determining means, when the power required exceeds the maximum power consumption limit, are adapted to primarily allocate power to the power requiring parts (12, J201-205), the operation of which are the most important.

10. An apparatus according to claim 9, wherein the receiving and determining means are further adapted to allocate less than or none of the power required or desired by a power consuming part (12, J201-205) adapted to perform a less important operation.

11. An apparatus according to claim 9 or 10, wherein the power consuming part of at least one external unit comprises timing means controlling an operation of the power consuming part by operating the power consuming part in a predetermined period of time between a starting time and an ending time.

12. An apparatus according to claim 11, wherein the transmitting means of the external unit (100, 12, J201-210) are adapted to transmit to the safety unit (20) information relating to a remaining period of time between an actual time to the stopping time.

13. An apparatus according to claim 12, wherein the receiving and determining means are adapted to base the determination of how much power to provide to the power consuming part (12, J201-205) on whether the remaining period of time and the power required or desired by the power consuming part (12, J201-205) are below a predetermined limit.

14. An apparatus according to any of claims 6-13, wherein the receiving and determining means, when the power required or desired exceeds the maximum power consumption limit, are adapted to, via the display means (21), request the operator to insert into the holding means information relating to the list of priorities or information relating to which power consuming part (12, J201-205) is to receive power or is not to receive power.

15. An apparatus according to any of the preceding claims, further comprising means (26, 50) for providing power to the safety module (20).

16. An apparatus according to claim 15, further comprising rechargeable battery means and means (Fig. 9) for recharging the battery means.

17. An apparatus according to claim 16, wherein the recharging means (Fig. 9) comprise means for connecting the recharging means to a mains power supply.

18. An apparatus according to claim 17, further comprising means for preventing connection of the recharging means (Fig. 9) to the mains power supply.

19. An apparatus according to claim 18, wherein the preventing means comprise means for communicating with the safety module (20), and wherein the receiving and determining means of the safety unit (20) are adapted to determine whether the preventing means are in operation.

20. An apparatus according to claim 19, wherein the power consuming part (12, J201-205) of one external unit (100, 12, J201-210) is one adapted for electro surgical treatment, and wherein the receiving and determining means of the safety module (20) are adapted to determine that no power is provided by the second providing means (Fig. 5), it the preventing means are not in operation.

21. An apparatus according to claim 16, wherein the rechargeable battery means comprise means for generating information relating to the power remaining in or presently being derived or derivable from the rechargeable battery means, and further comprising means for transmitting that information to the safety module (20), the comparing means being adapted to use that information as the maximum power consumption limit.

22. An apparatus according to any of the preceding claims, wherein the second providing means (Fig.5) are adapted to provide a common voltage to all external units (100, 12, J201-210), and wherein at least part of the external units (100, 12, J201-210) comprise means for converting the common voltage to a voltage suitable for the power consuming parts (12, J201-205) thereof.

23. An apparatus according to claim 22, wherein the power consuming part (12, J201-205) of the at least part of the external units (100, 12, J201-210) comprise means for generating information relating to an operating voltage for the power consuming part (12, J201-205) and means for transporting the information to the converting means, the converting means being controllable by the information so as to convert the common voltage to the operating voltage.

24. An apparatus according to any of the preceding claims, wherein the external units (100, 12, J201-210) comprise engaging means for engaging with corresponding engaging means (22) of the safety module (20) in order to transfer power and controlling information from the safety module (20) to the external units (100, 12, J201-210), the engaging means of the external units being substantially identical.

25. An apparatus according to any of the preceding claims, further comprising means (51) for inputting information for use in the operation of the safety unit (20) or of the power consuming part (12, J201-205) of an external unit (100, 12, J201-210).

26. An apparatus according to claim 25, wherein the inputting means (51) are adapted to be operated by a foot.

27. An apparatus according to claim 25 or 26, wherein
- the power consuming part (12, J201-205) of at least one external unit (100, 12, J201-210) is adapted to be controlled by predetermined information input at the inputting unit (51)
- the external unit (100, 12, J201-210) is adapted to inform the safety module (20) of the predetermined information, and
- the safety module (20) comprises means for evaluating the information input by the inputting means (51) and for relaying such information to the external unit (100, 12, J201-210), if the information corresponds to the predetermined information.

28. An apparatus for use in a dental clinic (72) or the like and for controlling and power feeding a number of power consuming parts, the apparatus comprising:
- a plurality of external units (100, 12, J201-210) each comprising a power consuming part (12, J201-205), and
- a safety module (20),
each external unit (100, 12, J201-210) comprising means for transmitting to the safety unit (20) information relating to the power required or desired by the power consuming part (12, J201-205) of the external unit (100, 12, J201-210) during a present or future operation thereof,
the safety module (20) comprising:
- means for receiving the information transmitted from the external units (100, 12, J201-210) means for evaluating or determining, on the basis of the information, the power required by the power consuming parts (12, J201-205) of the plurality of external units (100, 12, J201-210),
- means for comparing this required power to a maximum power consumption limit and for outputting a result of the comparison,
- means for receiving the result from the comparing means and for on the basis thereof determining the power which the power consuming part (12, J201-205) each external unit (100, 12, J201-210) is to be provided with,
- means for receiving power from a power source (50),
- first means for providing power to the transmitting means of the plurality of external units (100, 12, J201-210), and
- second means (Fig. 5) for providing the determined power to the power consuming part (12, J201-205) of each external unit (100, 12, J201-210), the second providing means (Fig. 5) being controllable by the receiving and determining means,
**characterized in that** the power consuming parts (12, J201-205) of the external units (100, 12, J201-210) are parts adapted to be used in the treatment of a patients teeth.

29. An apparatus according to claim 28, wherein the power consuming parts (12, J201-205) comprise
- lamps, such as lamps for emitting radiation for use in illumination or lamps for emitting radiation for use in hardening of materials,
- motors, such as motors for drills,
- pumps, such as pumps for water or air, and/or
- instruments for use in electro surgery.

30. An apparatus according to claim 29, wherein at least one of the external units (100, 12, J201-210) comprises means for holding and transmitting information to the safety module (20), the information relating to the importance of the operation of the power consuming part (12, J201-205) of the external unit (100, 12, J201-210), and wherein
- external units (100, 12, J201-210) the power consuming parts (12, J201-205) of which are lamps are adapted to hold and transmit information relating to a first priority,
- external units (100, 12, J201-210) the power consuming parts (12, J201-205) of which are motors are adapted to hold and transmit information relating to a second priority,
- external units (100, 12, J201-210) the power consuming parts (12, J201-205) of which are pumps are adapted to hold and transmit information relating to a third priority , and
- external units (100, 12, J201-210) the power consuming parts (12, J201-205) of which are for use in electro surgery are adapted to hold and transmit information relating to a fourth priority.

31. An apparatus according to claim 30, wherein the fourth priority is higher than the first, second and third priority, and where the first priority is preferably lower than the second and third priority.

32. An apparatus according to claim 28, further comprising a reservoir means for holding water, such as sterile or de-mineralised water, and wherein the power consuming part (12, J201-205) of an external unit (100, 12, J201-210) comprises a pump (27) for providing water from the reservoir means to the patients mouth.

33. An apparatus according to claim 28, further comprising a waste holding means (28) for holding the waste liquid, and wherein the power consuming part (12, J201-205) of an external unit (100, 12, J201-210) comprises a pump for sucking excess liquid from the patients mouth and into the waste holding means.

34. An apparatus according to claim 28, further comprising an external unit (100, 12, J201-210) for providing pressurised air, the power consuming part (12, J201-205) of the external unit (100, 12, J201-210) comprising a pump means.

35. A mobile unit (60) for use by a dentist in a dental clinic (72), the mobile unit (60) comprising a chair-like means, for the dentist to sit or rest on during treatment of a patient, and an apparatus according to claim 28.

36. A mobile unit according to claim 35, wherein the chair-like means comprises a battery means for supplying power to the safety unit.

37. A mobile unit according to claim 35 or 36, further comprising a reservoir means for holding water such as sterile or de-mineralised water, and wherein the power consuming part (12, J201-205) of an external unit comprises a pump for providing water from the reservoir means to the patients mouth, the reservoir means being held by the chair-like means (60).

38. A mobile unit according to any of claims 35-37, further comprising a waste holding means (28) for holding the waste liquid, and wherein the power consuming part (12, J201-205) of an external unit (100, 12, J201-210) comprises a pump for sucking excess liquid from the patient's mouth and into the waste holding means, the waste holding (28) means being held by the chair-like means (60).

39. A mobile unit according to any of claims 35-38, wherein the chair-like means (60) comprise a seat (61) for the dentist to sit or rest on, a back (62) and a holding means (65) for holding the apparatus, the back (62) having a shape being at least substantially a part of a circle, and the holding means (65) comprising one or more parts each having a shape being at least part of a circle.

40. A mobile unit according to claim 39, wherein the holding means (65) are movable between a first, closed position and a second, open position, wherein in the first position, the holding means (65) and the back (62) form a substantially circular cylindrical shape, at least substantially horizontal shape, the seat (61) preferably being positioned within the circular cylindrical shape, seen in a vertical direction.

41. A mobile unit according to claim 39, further comprising a second at least substantially circular cylindrical means positioned vertically lower than and having at least substantially the same outer dimensions as the back (62) and holding means (65).

42. A mobile unit according to claim 41, wherein the second at least substantially circular cylindrical means comprise means for engaging a power source and means for transmitting received power to a battery means adapted to provide power to the safety module.

43. A mobile unit according to any of claims 35-42, which is adapted to not require addition or feeding of water, power, or pressurised air from a position external to the unit (60) and to not require access to waste containing facilities outside the unit.

44. A dental clinic comprising one or more chair-like means (71) for patients to rest in during treatment of their teeth and one or more mobile units (60) according to any of claims 35-43.

45. A dental clinic according to claim 44, the clinic being adapted to not comprise fixed leads, lines, or wires for feeding water, power or waste liquid to or from the mobile units (60) during treatment of a patients teeth.

46. A dental clinic according to claim 44 or 45, further comprising a location (72) for use in cleaning power consuming parts (12, J201-205) of external units (100, 12, J201-210) having been used in a treatment of a patients teeth.

47. A dental clinic according to claim 46, wherein the location (72) is different from locations where the chair-like means (71) for the patients are positioned.

## Patentansprüche

1. Gerät zur Steuerung und Versorgung einer Anzahl energieverbrauchender Teile mit Energie, wobei das Gerät umfaßt:
- mehrere externe Einheiten (100, 12, I201-210), von denen jede ein energieverbrauchendes Teil (12, I201-205) umfaßt, und
- ein Sicherheitsmodul (20),
wobei jede externe Einheit (100, 12, I201-210) Mittel umfaßt zum Übertragen von Information an die Sicherheitseinheit betreffend die Energie, die erforderlich oder gewünscht ist für das energieverbrauchende Teil (12, I201-205) der externen Einheit (100, 12, I201-210) während seines gegenwärtigen oder zukünftigen Betriebs,
wobei das Sicherheitsmodul (20) umfaßt:
- Mittel zum Empfang der von den externen Einheiten (100, 12, I201-210) übertragenen Information und basierend auf der Information, zum Auswerten oder Bestimmen der von den energieverbrauchenden Teilen (12, I201-205) der mehreren externen Einheiten (100, 12, I201-210) erforderlichen Energie,
- Mittel zum Vergleich dieser erforderlichen Energie mit einer Grenze für den maximalen Energieverbrauch und zur Ausgabe eines Ergebnisses des Vergleichs,
- Mittel zur Aufnahme des Ergebnisses von den Vergleichsmitteln und auf dessen Basis, zur Bestimmung der Energie, mit der das energieverbrauchende Teil (12, I201-205) jeder externen Einheit (100, 12, I201-210) versorgt werden soll,
- Mittel zur Aufnahme von Energie von einer Energiequelle (50),
- erste Mittel zum Liefern von Energie an die Übertragungsmittel der mehreren externen Einheiten (100, 12, I201-210) und
- zweite Mittel (Fig. 5) zum Liefern der bestimmten Energie an das energieverbrauchende Teil (12, I201-205) jeder externen Einheit (100, 12, I201-210), wobei die zweiten Liefermittel durch die Aufnahme- und Bestimmungsmittel steuerbar sind,
wobei wenigstens eine externe Einheit (100, 12, I201-210) Mittel umfaßt zum Bestimmen der Energie, die erforderlich oder gewünscht ist von dem energieverbrauchenden Teil (12, I201-205) während dessen Betrieb, **dadurch gekennzeichnet, daß** die Übertragungsmittel und das energieverbrauchende Teil (12, I201-205) lösbar miteinander verbunden sind, wobei die Bestimmungsmittel der externen Einheit (100, 12, I201-210) zumindest im wesentlichen fest mit dem energieverbrauchenden Teil (12, I201-205) verbunden sind.

2. Gerät nach Anspruch 1, bei welchem die Aufnahme- und Bestimmungsmittel ausgelegt sind zum Bestimmen einer Menge an Energie, die tatsächlich von dem energieverbrauchenden Teil (12, I201-205) einer externen Einheit (100, 12, I201-210) verbraucht wurde und um diese Menge mit einer oder mehreren Grenzen maximaler Energie zu vergleichen.

3. Gerät nach Anspruch 2, bei welchem die Aufnahme- und Bestimmungsmittel derart ausgelegt sind, daß die zweiten Liefermittel (Fig. 5) die einem energieverbrauchenden Teil (12, I201-205) zugeführte Energie reduzieren, falls die verbrauchte Energie dabei eine Grenze maximaler Energie überschreitet.

4. Gerät nach einem der vorstehenden Ansprüche, des weiteren umfassend Anzeigemittel (21) zum Liefern von Information an einen Operateur des Gerätes.

5. Gerät nach einem der vorstehenden Ansprüche, bei welchem das Aufnahme- und Bestimmungsmittel des Sicherheitsmoduls (20) derart ausgelegt ist, daß es bei Empfang von Information von einer externen Einheit (100, 12, I201-210) unter Wunsch oder Anforderung von Energie, bestimmt, daß
- falls des von den Vergleichsmitteln ausgegebene Ergebnis bedeutet, daß die von den energieverbrauchenden Teilen (12, I201-205) der mehreren externen Einheiten (100, 12, I201-210) erforderte Energie gleich oder kleiner ist als die Grenze des maximalen Energieverbrauchs, die gewünschte oder erforderliche Energie dem energieverbrauchenden Teil (12, I201-205) der externen Einheit (100, 12, I201-210) geliefert wird, und
- falls das von den Vergleichsmitteln ausgegebene Ergebnis bedeutet, daß die von den energieverbrauchenden Teilen (12, I201-205) der mehreren externen Einheiten (100, 12, I201-210) erforderte Energie die Grenze des maximalen Energieverbrauchs überschreitet, keine Energie dem energieverbrauchenden Teil (12, I201-205) der externen Einheit (100, 12, I201-210) geliefert wird.

6. Gerät nach einem der vorstehenden Ansprüche, des weiteren umfassend Mittel zum Halten von Information in Bezug auf eine Liste von Prioritäten, welche die relative Wichtigkeit des Betriebs der energieverbrauchenden Teile (12, I201-205) der externen Einheiten (100, 12, I201-210) betrifft.

7. Gerät nach Anspruch 6, bei welchem wenigstens eine der externen Einheiten (100, 12, I201-210) Mittel umfaßt zum Halten und Übertragen von Information zu dem Sicherheitsmodul (20), wobei die Information die Wichtigkeit des Betriebs des energieverbrauchenden Teils (12, I201-205) der externen Einheit (100, 12, I201-210) betrifft.

8. Gerät nach Anspruch 7, bei welchem das Halte- und Übertragungsmittel bei dem energieverbrauchenden Teil (12, I201-205) der externen Einheit (100, 12, I201-210) positioniert ist.

9. Gerät nach Anspruch 6, bei welchem die Aufnahme- und Bestimmungsmittel ausgelegt sind, um zuerst Energie den energieverbrauchenden Teilen (12, I201-205) zuzuteilen, deren Betrieb der wichtigste ist, wenn die erforderliche Energie die Grenze maximalen Energieverbrauchs überschreitet.

10. Gerät nach Anspruch 9, bei welchem die Aufnahme- und Bestimmungsmittel weiters derart ausgelegt sind, daß sie weniger oder keine von einem energieverbrauchenden Teil (12, I201-205) erforderliche oder gewünschte Energie zuteilen, das ausgelegt ist zum Durchführen eines weniger wichtigen Betriebes.

11. Gerät nach Anspruch 9 oder 10, bei welchem das energieverbrauchende Teil wenigstens einer externen Einheit Zeitsteuerungsmittel umfaßt zum Steuern eines Betriebes des energieverbrauchenden Teiles durch Betrieb des energieverbrauchenden Teiles in einer vorbestimmten Zeitspanne zwischen einer Startzeit und einer Endzeit.

12. Gerät nach Anspruch 11, bei welchem die Übertragungsmittel der externen Einheit (100, 12, I201-210) ausgelegt sind zum Übertragen von Information in Bezug auf eine verbleibende Zeitspanne zwischen einer momentanen Zeit und der Stoppzeit an die Sicherheitseinheit (20).

13. Gerät nach Anspruch 12, bei welchem die Aufnahme- und Bestimmungsmittel derart ausgelegt sind, daß sie die Bestimmung, wieviel Energie dem energieverbrauchenden Teil (12, I201-205) zugeführt werden soll, darauf basieren lassen, ob die verbleibende Zeitspanne und die von dem energieverbrauchenden Teil (12, I201-205) erforderte oder gewünschte Energie unterhalb einer vorbestimmten Grenze liegen.

14. Gerät nach einem der Ansprüche 6 bis 13, bei welchem die Aufnahme- und Bestimmungsmittel derart ausgelegt sind, daß sie über die Anzeigemittel (21) den Operateur auffordern, in das Haltemittel Information einzugeben betreffend die Liste an Prioritäten oder Information betreffend welches energieverbrauchende Teil (12, I201-205) Energie empfangen oder nicht empfangen soll, wenn die erforderliche oder gewünschte Energie die Grenze maximalen Energieverbrauchs überschreitet.

15. Gerät nach einem der vorstehenden Ansprüche, weiter umfassend Mittel (26, 50) zum Liefern von Energie an das Sicherheitsmodul (20).

16. Gerät nach Anspruch 15, weiter umfassend wiederaufladbare Batterieeinrichtungen und Mittel (Fig. 9) zum Wiederaufladen der Batterieeinrichtungen.

17. Gerät nach Anspruch 16, bei welchem die Mittel zum Wiederaufladen (Fig. 9) Mittel zum Verbinden der Mittel zum Wiederaufladen mit einer Netzstromenergieversorgung umfassen.

18. Gerät nach Anspruch 17, weiter umfassend Mittel zum Verhindern der Verbindung der Mittel zum Wiederaufladen (Fig. 9) mit der Netzstromenergieversorgung.

19. Gerät nach Anspruch 18, bei welchem die Mittel zum Verhindern Mittel umfassen zum Kommunizieren mit dem Sicherheitsmodul (20) und wobei die Aufnahme- und Bestimmungsmittel der Sicherheitseinheit (20) ausgelegt sind, um zu bestimmen, ob sich die Mittel zum Verhindern im Betrieb befinden.

20. Gerät nach Anspruch 19, bei welchem das energieverbrauchende Teil (12, I201-205) einer externen Einheit (100, 12, I201-210) eines ist, das ausgelegt ist zur elektrochirurgischen Behandlung und wobei die Aufnahme- und Bestimmungsmittel des Sicherheitsmoduls (20) ausgelegt ist, um zu bestimmen, daß keine Energie von dem zweiten Liefermittel (Fig. 5) geliefert wird, falls die Mittel zum Verhindern sich nicht in Betrieb befinden.

21. Gerät nach Anspruch 16, bei welchem die wiederaufladbaren Batterieeinrichtungen Mittel umfassen zum Erzeugen von Information in Bezug auf die Energie, die noch in den wiederaufladbaren Energieeinrichtungen verblieben ist oder momentan von diesen erhältlich oder erhaltbar ist und des weiteren Mittel umfaßt zum Übertragen der Information zu dem Sicherheitsmodul (20), wobei die Vergleichsmittel ausgelegt sind, um diese Information als Grenze maximalen Energieverbrauchs zu nutzen.

22. Gerät nach einem der vorstehenden Ansprüche, bei welchem die zweiten Liefermittel (Fig. 5) ausgelegt sind, um eine Gleich(Takt)spannung an alle externen Einheiten (100, 12, I201-210) anzulegen und wobei wenigstens ein Teil der externen Einheiten (100, 12, I201-210) Mittel umfaßt zum Umwandeln der Spannung in eine Spannung, die geeignet ist für dessen energieverbrauchenden Teile (12, 201-205).

23. Gerät nach Anspruch 22, bei welchem das energieverbrauchende Teil (12, I201-205) wenigstens eines Teils der externen Einheiten (100, 12, I201-210) Mittel umfaßt zum Erzeugen von Information betreffend eine Betriebsspannung für das energieverbrauchende Teil (12, I201-205) und Mittel zum Übertragen der Information an die Umwandlungsmittel, wobei die Umwandlungsmittel durch die Information derart steuerbar sind, daß sie die Gleichspannung in die Betriebsspannung umwandeln.

24. Gerät nach einem der vorstehenden Ansprüche, bei welchem die externen Einheiten (100, 12, I201-210) Eingriffsmittel umfassen zum Eingriff mit entsprechenden Eingriffsmitteln (22) des Sicherheitsmoduls (20) zum Zwecke der Übertragung von Energie und zum Steuern von Information von dem Sicherheitsmodul (20) zu den externen Einheiten (100, 12, I201-210), wobei die Eingriffsmittel der externen Einheiten im wesentlichen identisch sind.

25. Gerät nach einem der vorstehenden Ansprüche, weiter Mittel (51) umfassend zur Eingabe von Information zur Verwendung beim Betrieb der Sicherheitseinheit (20) oder des energieverbrauchenden Teils (12, I201-205) einer externen Einheit (100, 12, I201-210).

26. Gerät nach Anspruch 25, bei welchem die Eingabemittel (51) ausgelegt sind, um von einem Fuß betätigt zu werden.

27. Gerät nach Anspruch 25 oder 26, bei welchem
- das energieverbrauchende Teil (12, I201-205) wenigstens einer externen Einheit (100, 12, I201-210) ausgelegt ist, um von vorbestimmter Information gesteuert zu werden, die bei der Eingabeeinheit (51) eingegeben wurde,
- die externe Einheit (100, 12, I201-210) ausgelegt ist, um das Sicherheitsmodul (20) von der vorbestimmten Information zu informieren, und
- das Sicherheitsmodul (20) Mittel umfaßt zum Auswerten der von den Eingabemitteln (51) eingegebenen Information und zum Weiterleiten derartiger Information zu der externen Einheit (100, 12, I201-210), falls die Information der vorbestimmten Information entspricht.

28. Gerät zur Verwendung in einer Zahnklinik (72) oder ähnlichem und zur Steuerung und Versorgung einer Anzahl energieverbrauchender Teile mit Energie, wobei das Gerät umfaßt:
- mehrere externe Einheiten (100, 12, I201-210), von denen jede ein energieverbrauchendes Teil (12, I201-205) umfaßt, und
- ein Sicherheitsmodul (20),
wobei jede externe Einheit (100, 12, I201-210) Mittel umfaßt zum Übertragen von Information an die Sicherheitseinheit betreffend die Energie, die erforderlich oder gewünscht ist für das energieverbrauchende Teil (12, I201-205) der externen Einheit (100, 12, I201-210) während seines gegenwärtigen oder zukünftigen Betriebs,
wobei das Sicherheitsmodul (20) umfaßt:
- Mittel zum Empfang der von den externen Einheiten (100, 12, I201-210) übertragenen Information und basierend auf der Information, zum Auswerten oder Bestimmen der von den energieverbrauchenden Teilen (12, I201-205) der mehreren externen Einheiten (100, 12, I201-210) erforderlichen Energie,
- Mittel zum Vergleich dieser erforderlichen Energie mit einer Grenze für den maximalen Energieverbrauch und zur Ausgabe eines Ergebnisses des Vergleichs,
- Mittel zur Aufnahme des Ergebnisses von den Vergleichsmitteln und auf dessen Basis, zur Bestimmung der Energie, mit der das energieverbrauchende Teil (12, I201-205) jeder externen Einheit (100, 12, I201-210) versorgt werden soll,
- Mittel zur Aufnahme von Energie von einer Energiequelle (50),
- erste Mittel zum Liefern von Energie an die Übertragungsmittel der mehreren externen Einheiten (100, 12, I201-210) und
- zweite Mittel (Fig. 5) zum Liefern der bestimmten Energie an das energieverbrauchende Teil (12, I201-205) jeder externen Einheit (100, 12, I201-210), wobei die zweiten Liefermittel durch die Aufnahme- und Bestimmungsmittel steuerbar sind,
**dadurch gekennzeichnet, daß** die energieverbrauchenden Teile (12, I201-205) der externen Einheiten (100, 12, I201-210) Teile sind, die ausgelegt sind zur Verwendung bei der Behandlung der Zähne eines Patienten.

29. Gerät nach Anspruch 28, bei welchem die energieverbrauchenden Teile (12, I201-205) umfassen:
- Lampen, beispielsweise Lampen zum Ausstrahlen von Strahlung zur Verwendung beim Beleuchten oder Lampen zum Ausstrahlen von Strahlung zur Verwendung beim Härten von Materialien bzw. Werkstoffen,
- Motoren, beispielsweise Motoren für Bohrer,
- Pumpen, beispielsweise Pumpen für Wasser oder Luft, und/oder
- Instrumente zur Verwendung bei der Elektrochirurgie.

30. Gerät nach Anspruch 29, bei welchem wenigstens eine der externen Einheiten (100, 12, I201-210) Mittel umfaßt zum Halten und Übertragen von Information an das Sicherheitsmodul (20), wobei die Information die Wichtigkeit des Betriebs des energieverbrauchenden Teils (12, I201-205) der externen Einheit (100, 12, I201-210) betrifft und wobei
- externe Einheiten (100, 12, I201-210), deren energieverbrauchenden Teile (12, I201-205) Lampen sind, ausgelegt sind zum Halten und Übertragen von Information betreffend eine erste Priorität,
- externe Einheiten (100, 12, I201-210), deren energieverbrauchende Teile (12, I201-205) Motoren sind, ausgelegt sind zum Halten und Übertragen von Information betreffend eine zweite Priorität,
- externe Einheiten (100, 12, I201-210), deren energieverbrauchende Teile (12, I201-205) Pumpen sind, ausgelegt sind zum Halten und Übertragen von Information betreffend eine dritte Priorität, und
- externe Einheiten (100, 12, I201-210), deren energieverbrauchende Teile (12, I201-205) der Verwendung in der Elektrochirurgie dienen, ausgelegt sind zum Halten und Übertragen von Information betreffend eine vierte Priorität.

31. Gerät nach Anspruch 30, bei welchem die vierte Priorität höher ist als die erste, zweite und dritte Priorität und wobei die erste Priorität vorzugsweise niederer ist als die zweite und dritte Priorität.

32. Gerät nach Anspruch 28, des weiteren umfassend eine Reservoireinrichtung zum Halten von Wasser, beispielsweise steriles oder entmineralisiertes Wasser und wobei das energieverbrauchende Teil (12, I201-205) einer externen Einheit (100, 12, I201-210) eine Pumpe (27) umfaßt, um Wasser von der Reservoireinrichtung zum Mund des Patienten zuzuführen.

33. Gerät nach Anspruch 28, des weiteren umfassend eine Ausscheidungshalteeinrichtung (28) zum Halten der gebrauchten Flüssigkeit und wobei das energieverbrauchende Teil (12, I201-205) einer externen Einheit (100, 12, I201-210) eine Pumpe umfaßt zum Saugen überschüssiger Flüssigkeit aus dem Mund des Patienten in die Ausscheidungshalteeinrichtung.

34. Gerät nach Anspruch 28, des weiteren umfassend eine externe Einheit (100, 12, I201-210) zum Liefern von Druckluft, wobei das energieverbrauchende Teil (12, I201-205) der externen Einheit (100, 12, I201-210) eine Pumpeinrichtung umfaßt.

35. Mobile Einheit (60) zur Verwendung von einem Zahnarzt in einer Zahnklinik (72), wobei die mobile Einheit (60) eine stuhlartige Einrichtung umfaßt für den Zahnarzt, auf der er sitzt oder ruht während der Behandlung eines Patienten, und ein Gerät gemäß Anspruch 28.

36. Mobile Einheit nach Anspruch 35, bei welcher die stuhlartige Einrichtung eine Batterieeinrichtung umfaßt zur Zufuhr von Energie an die Sicherheitseinheit.

37. Mobile Einheit nach Anspruch 35 oder 36, des weiteren umfassend eine Reservoireinrichtung zum Halten von Wasser, beispielsweise steriles oder entmineralisiertes Wasser und wobei das energieverbrauchende Teil (12, I201-205) einer externen Einheit eine Pumpe umfaßt zum Liefern von Wasser von der Reservoireinrichtung zu dem Mund des Patienten, wobei die Reservoireinrichtung von der stuhlartigen Einrichtung (60) gehalten ist.

38. Mobile Einheit nach einem der Ansprüche 35 bis 37, des weiteren umfassend eine Ausscheidungshalteeinrichtung (28) zum Halten der gebrauchten Flüssigkeit und wobei das energieverbrauchende Teil (12, I201-205) einer externen Einheit (100, 12, I201-210) eine Pumpe umfaßt zum Saugen von überschüssiger Flüssigkeit aus dem Mund des Patienten in die Ausscheidungshalteeinrichtung, wobei die Ausscheidungshalteeinrichtung (28) durch die stuhlartige Einrichtung (60) gehalten ist.

39. Mobile Einheit nach einem der Ansprüche 35-38, bei welcher die stuhlartige Einrichtung (60) einen Sitz (61) für den Zahnarzt zum Zwecke des Sitzens oder Ruhens darauf umfaßt, einen Rückenteil (62) und eine Halteeinrichtung (65) zum Halten des Geräts, wobei das Rückenteil (62) eine Gestalt hat, die zumindest im wesentlichen ein Teil eines Kreises ist und die Halteeinrichtung (25) ein oder mehrere Teile hat, von denen jedes eine Gestalt hat, die zumindest teilweise ein Kreis ist.

40. Mobile Einheit nach Anspruch 39, bei welcher die Haltemittel (65) bewegbar sind zwischen einer ersten, geschlossenen Stellung, und einer zweiten, offenen Stellung, wobei in der ersten Stellung die Haltemittel (65) und das Rückenteil (62) eine im wesentlichen kreisförmige, zylindrische Form ausbilden mit zumindest im wesentlichen horizontaler Gestalt, wobei der Sitz (61) in vertikaler Richtung gesehen vorzugsweise innerhalb der kreisförmigen, zylindrischen Form positioniert ist.

41. Mobile Einheit nach Anspruch 39, des weiteren umfassend eine zweite, zumindest im wesentlichen kreisförmige zylindrische Einrichtung, die vertikal niederer positioniert ist als und zumindest im wesentlichen die gleichen Außenabmessungen hat wie das Rückenteil (62) und die Halteeinrichtung (65).

42. Mobile Einheit nach Anspruch 41, bei welcher die zweiten zumindest im wesentlichen kreisförmigen, zylindrischen Einrichtungen Mittel umfassen zum Eingriff mit einer Energiequelle und Mittel zum Übertragen empfangener Energie an eine Batterieeinrichtung, die ausgelegt ist, um Energie an das Sicherheitsmodul zu liefern.

43. Mobile Einheit nach einem der Ansprüche 35 bis 42, die derart ausgelegt ist, daß sie nicht den Zusatz oder die Zufuhr von Wasser, Energie oder Druckluft von einer Stelle außerhalb der Einheit (60) erfordert und keinen Zugang zu Aussonderungsbeinhaltungseinrichtungen außerhalb der Einheit erfordert.

44. Zahnklinik mit einer oder mehreren stuhlartigen Einrichtungen (71) für Patienten, um darin während der Behandlung ihrer Zähne zu ruhen und einer oder mehreren mobilen Einheiten (60) gemäß einem der Ansprüche 35 bis 43.

45. Zahnklinik nach Anspruch 44, wobei die Klinik derart ausgelegt ist, daß sie keine festen Zuführungen, Leitungen oder Drähte zur Zufuhr von Wasser, Energie oder gebrauchter Flüssigkeit zu oder von den mobilen Einheiten (60) während der Behandlung der Zähne eines Patienten umfaßt.

46. Zahnklinik nach Anspruch 44 oder 45, des weiteren umfassend einen Ort (72) zur Verwendung bei der Reinigung von energieverbrauchenden Teilen (12, I201-205) externer Einheiten (100, 12, I201-210), die bei der Behandlung der Zähne eines Patienten Verwendung fanden.

47. Zahnklinik nach Anspruch 46, bei welcher der Ort (72) unterschiedlich ist zu den Orten, wo die stuhlartigen Einrichtungen (71) für die Patienten positioniert sind.

## Revendications

1. Appareil de commande et d'alimentation de plusieurs éléments consommant de l'énergie, l'appareil comprenant :
- une pluralité d'unités externes (100, 12, J201-210), chacune d'entre elles comprenant un élément consommant de l'énergie (12, J201-205) et
- un module de sécurité (20),
chaque unité externe (100, 12, J201-210) comprenant des moyens de transmission à l'unité de sécurité d'informations relatives à l'énergie nécessaire ou souhaitée par l'élément consommant de l'énergie (12,J201-205) de l'unité externe (100,12,J201-210) pendant un fonctionnement présent ou futur de celle-ci,
le module de sécurité (20) comprenant :
- des moyens de réception des informations provenant des unités externes (100, 12, J201-210) et d'évaluation ou détermination, sur la base des informations, de l'énergie requise par les éléments consommant de l'énergie (12, J201-205) de la pluralité des unités externes (100, 12, J201-210),
- des moyens permettant la comparaison entre cette énergie nécessaire et une limite maximale de consommation d'énergie, et l'émission d'un résultat de la comparaison,
- des moyens de réception du résultat provenant des moyens de comparaison, et de détermination, sur la base de ce résultat, de l'énergie qui doit alimenter l'élément consommant de l'énergie (12, J201-205) de chaque unité externe (100, 12, J201-210),
- des moyens de réception de l'énergie depuis une source d'énergie (50),
- des premiers moyens de fourniture d'énergie aux moyens de transmission de la pluralité des unités externes (100, 12, J201-210), et
- des seconds moyens (Fig. 5) de fourniture de l'énergie déterminée à l'élément consommant de l'énergie (12, J201-205) de chaque unité externe (100, 12, J201-210), les seconds moyens de fourniture pouvant être commandés par les moyens de réception et de détermination,
dans lequel au moins une unité externe (100, 12, J201-210) comprend des moyens de détermination de l'énergie nécessaire ou souhaitée par l'élément consommant de l'énergie (12,J201-205) pendant le fonctionnement de celui-ci, **caractérisé en ce que** les moyens de transmission et les éléments consommant de l'énergie (12, J201-205) sont interconnectés de façon détachable, les moyens de détermination de 1' unité externe (100, 12, J201-210) étant au moins sensiblement interconnectés de façon fixe à l'élément consommant de l'énergie (12, J201-205).

2. Appareil selon la revendication 1, dans lequel les moyens de réception et de détermination sont conçus pour déterminer une quantité d'énergie effectivement consommée par l'élément consommant de l'énergie (12, J201-205) d'une unité externe (100, 12, J201-210) et pour comparer cette quantité à une ou plusieurs limites maximales de consommation d'énergie.

3. Appareil selon la revendication 2, dans lequel les moyens de réception et de détermination sont conçus de sorte que les seconds moyens de fourniture (Fig. 5) réduisent l'alimentation d'un élément consommant de l'énergie (12, J201-205), si l'énergie consommée par celui-ci dépasse une limite maximale de consommation d'énergie.

4. Appareil selon l'une quelconque des revendications précédentes, comprenant en outre des moyens d'affichage (21) pour la délivrance d'informations à un opérateur de l'appareil.

5. Appareil selon l'une quelconque des revendications précédentes, dans lequel les moyens de réception et de détermination du module de sécurité (20) sont conçus pour déterminer, lors de la réception des informations provenant d'une unité externe (100, 12, J201-210) souhaitant ou nécessitant de l'énergie, que
- si l'émission du résultat par les moyens de comparaison signifie que l'énergie requise par les éléments consommant de l'énergie (12, J201-205) de la pluralité des unités externes (100, 12, J201-210) est égale ou inférieure à la limite maximale de consommation d'énergie, l'énergie souhaitée ou nécessaire est fournie à l'élément consommant de l'énergie (12, J201-205) de l'unité externe (100, 12, J201-210), et
- si l'émission du résultat par les moyens de comparaison signifie que l'énergie requise par les éléments consommant de l'énergie (12, J201-205) de la pluralité des unités externes (100, 12, J201-210) est supérieure à la limite maximale de consommation d'énergie, aucune énergie n'est fournie à l'élément consommant de l'énergie (12, J201-205) de l'unité externe (100, 12, J201-210).

6. Appareil selon l'une quelconque des revendications précédentes, comprenant en outre des moyens de maintien des informations relatives à une liste de priorités concernant l'importance relative du fonctionnement des éléments consommant de l'énergie (12, J201-205) des unités externes (100, 12, J201-210).

7. Appareil selon la revendication 6, dans lequel au moins une des unités externes (100, 12, J201-210) comprend des moyens de maintien et de transmission des informations au module de sécurité (20), les informations concernant l'importance du fonctionnement de l'élément consommant de l'énergie (12, J201-205) de l'unité externe (100, 12, J201-210).

8. Appareil selon la revendication 7, dans lequel les moyens de maintien et de transmission sont positionnés sur l'élément consommant de l'énergie (12, J201-205) de l'unité externe (100, 12, J201-210).

9. Appareil selon la revendication 6, dans lequel les moyens de réception et de détermination, lorsque l'énergie nécessaire dépasse la limite maximale de consommation d'énergie, sont conçus pour affecter essentiellement de l'énergie aux éléments consommant de l'énergie (12, J201-205), le fonctionnement de ces derniers étant le plus important.

10. Appareil selon la revendication 9, dans lequel les moyens de réception et de détermination sont en outre conçus pour affecter une quantité d'énergie inférieure, ou nulle, à celle de l'énergie nécessaire ou souhaitée par un élément consommant de l'énergie (12, J201-205) devant exécuter un fonctionnement moins important.

11. Appareil selon la revendication 9 ou 10, dans lequel l'élément consommant de l'énergie d'au moins une unité externe comprend des moyens de synchronisation commandant un fonctionnement de l'élément consommant de l'énergie par l'exploitation de l'élément consommant de l'énergie dans une période prédéterminée de temps entre un temps initial et un temps final.

12. Appareil selon la revendication 11, dans lequel les moyens de transmission de l'unité externe (100, 12, J201-210) sont conçus pour transmettre à l'unité de sécurité (20) des informations concernant une période de temps restant entre un temps effectif et le temps d'arrêt.

13. Appareil selon la revendication 12, dans lequel les moyens de réception et de détermination sont conçus pour baser la détermination de la quantité d'énergie à fournir à l'élément consommant de l'énergie (12, J201-205) sur le fait de savoir si la période de temps restant et l'énergie nécessaire ou souhaitée par l'élément consommant de l'énergie (12, J201-205) se situent en dessous d'une limite prédéterminée.

14. Appareil selon l'une quelconque des revendications 6-13, dans lequel les moyens de réception et de détermination, lorsque l'énergie nécessaire ou souhaitée dépasse la limite maximale de consommation d'énergie, sont conçus pour demander, via les moyens d'affichage (21), à l'opérateur d'incorporer dans les moyens de maintien les informations concernant la liste des priorités ou les informations concernant le type d'élément consommant de l'énergie (12, J201-205) qui doit recevoir ou non de l'énergie.

15. Appareil selon l'une quelconque des revendications précédentes, comprenant en outre des moyens (26, 50) de fourniture de l'énergie au module de sécurité (20).

16. Appareil selon la revendication 15, comprenant en outre des moyens de batterie rechargeable et des moyens (Fig. 9) de rechargement des moyens de batterie.

17. Appareil selon la revendication 16, dans lequel les moyens de rechargement (Fig. 9) comprennent des moyens de connexion des moyens de rechargement à une alimentation par secteur.

18. Appareil selon la revendication 17, comprenant en outre des moyens destinés à éviter la connexion des moyens de rechargement (Fig. 9) à l'alimentation par secteur.

19. Appareil selon la revendication 18, dans lequel les moyens de prévention comprennent des moyens de communication avec le module de sécurité (20), et dans lequel les moyens de réception et de détermination de l'unité de sécurité (20) sont conçus pour déterminer si les moyens de prévention fonctionnent.

20. Appareil selon la revendication 19, dans lequel l'élément consommant de l'énergie (12, J201-205) d'une unité externe (100, 12, J201-210) est conçu pour le traitement électro-chirurgical, et dans lequel les moyens de réception et de détermination du module de sécurité (20) sont conçus pour vérifier qu'aucune énergie n'est fournie par les seconds moyens de fourniture (Fig. 5), si les moyens de prévention ne fonctionnent pas.

21. Appareil selon la revendication 16, dans lequel les moyens de batterie rechargeable comprennent des moyens de génération d'informations relatives à l'énergie restante dans les moyens de batterie rechargeable, ou étant en cours de dérivation ou pouvant être dérivée de ceux-ci, et comprenant en outre des moyens de transmission de ces informations au module de sécurité (20), les moyens de comparaison étant conçus pour utiliser ces informations comme la limite maximale de consommation d'énergie.

22. Appareil selon l'une quelconque des revendications précédentes, dans lequel les seconds moyens de fourniture (Fig. 5) sont conçus pour fournir une tension commune à toutes les unités externes (100, 12, J201-210), et dans lequel au moins une partie des unités externes (100, 12, J201-210) comprend des moyens de conversion de la tension commune en une tension appropriée aux éléments consommant de l'énergie de celles-ci.

23. Appareil selon la revendication 22, dans lequel l'élément consommant de l'énergie (12, J201-205) de la partie au moins des unités externes (100, 12, J201-210) comprend des moyens de génération d'informations concernant une tension de service pour l'élément consommant de l'énergie (12, J201-205) et des moyens de transport des informations vers les moyens de conversion, les moyens de conversion pouvant être commandés par les informations de façon à convertir la tension commune en tension de service.

24. Appareil selon l'une quelconque des revendications précédentes, dans lequel les unités externes (100, 12, J201-210) comprennent des moyens d'occupation en vue de l'occupation par des moyens d'occupation correspondants (22) du module de sécurité (20), afin de transférer l'énergie et les informations de commande, du module de sécurité (20) aux unités externes (100, 12, J201-210), les moyens d'occupation des unités externes étant sensiblement identiques.

25. Appareil selon l'une quelconque des revendications précédentes, comprenant en outre des moyens (51) d'entrée des informations à des fins d'utilisation dans le fonctionnement de l'unité de sécurité (20) ou de l'élément consommant de l'énergie (12, J201-205) d'une unité externe (100, 12, J201-210).

26. Appareil selon la revendication 25, dans lequel les moyens d'entrée (51) sont conçus pour être actionnés par un pied.

27. Appareil selon la revendication 25 ou 26, dans lequel
- l'élément consommant de l'énergie (12, J201-205) d'au moins une unité externe (100, 12, J201-210) est conçu pour être commandé par des informations prédéterminées entrées dans l'unité d'entrée (51),
- l'unité externe (100, 12, J201-210) est conçue pour informer le module de sécurité (20) des informations prédéterminées, et
- le module de sécurité (20) comprend des moyens d'évaluation des informations entrées par les moyens d'entrée (51) et de transmission relais de ces informations à l'unité externe (100, 12, J201-210), si les informations correspondent aux informations prédéterminées.

28. Appareil destiné à une utilisation en cabinet dentaire (72) ou similaire, et destiné à la commande et l'alimentation de plusieurs éléments consommant de l'énergie, l'appareil comprenant :
- une pluralité d'unités externes (100, 12, J201-210), chacune d'entre elles comprenant un élément consommant de l'énergie (12, J201-205) et
- un module de sécurité (20),
chaque unité externe (100, 12, J201-210) comprenant des moyens de transmission à l'unité de sécurité d'informations relatives à l'énergie nécessaire ou souhaitée par l'élément consommant de l'énergie (12,J201-205) de l'unité externe (100,12,J201-210) pendant un fonctionnement présent ou futur de celle-ci,
le module de sécurité (20) comprenant :
- des moyens de réception des informations provenant des unités externes (100, 12, J201-210) à des fins d'évaluation ou de détermination, sur la base des informations, de l'énergie requise par les éléments consommant de l'énergie (12, J201-205) de la pluralité des unités externes (100, 12, J201-210),
- des moyens permettant la comparaison entre cette énergie nécessaire et une limite maximale de consommation d'énergie, et l'émission d'un résultat de la comparaison,
- des moyens de réception du résultat provenant des moyens de comparaison et de détermination, sur la base de ce résultat, de l'énergie qui doit alimenter l'élément consommant de l'énergie (12, J201-205) de chaque unité externe (100, 12, J201-210),
- des moyens de réception de l'énergie depuis une source d'énergie (50),
- des premiers moyens de fourniture d'énergie aux moyens de transmission de la pluralité des unités externes (100, 12, J201-210), et
- des seconds moyens (Fig. 5) de fourniture de l'énergie déterminée à l'élément consommant de l'énergie (12, J201-205) de chaque unité externe (100, 12, J201-210), les seconds moyens de fourniture (Fig. 5) pouvant être commandés par les moyens de réception et de détermination,
**caractérisé en ce que** les éléments consommant de l'énergie (12, J201-205) des unités externes (100, 12, J201-210) sont des éléments conçus pour être utilisés dans le traitement des dents d'un patient.

29. Appareil selon la revendication 28, dans lequel les éléments consommant de l'énergie (12, J201-205) comprennent :
- des lampes, telles que des lampes pour l'émission de radiations à des fins d'éclairage ou des lampes pour l'émission de radiations à des fins de polymérisation de matériaux,
- des moteurs, tels que les moteurs destinés aux forets,
- des pompes, telles que des pompes à eau ou air, et/ou
- des instruments d'électro-chirurgie.

30. Appareil selon la revendication 29, dans lequel au moins une des unités externes (100, 12, J201-210) comprend des moyens de maintien et de transmission des information au module de sécurité (20), les informations concernant l'importance du fonctionnement de l'élément consommant de l'énergie (12, J201-205) de l'unité externe (100, 12, J201-210), et dans lequel
- des unités externes (100, 12, J201-210) dont les éléments consommant de l'énergie (12, J201-205) sont des lampes sont conçues pour maintenir et transmettre les informations relatives à une première priorité,
- des unités externes (100, 12, J201-210) dont les éléments consommant de l'énergie (12, J201-205) sont des moteurs sont conçues pour maintenir et transmettre les informations relatives à une deuxième priorité,
- des unités externes (100, 12, J201-210) dont les éléments consommant de l'énergie (12, J201-205) sont des pompes sont conçues pour maintenir et transmettre les informations relatives à une troisième priorité, et
- des unités externes (100, 12, J201-210) dont les éléments consommant de l'énergie (12, J201-205) sont utilisés en électro-chirurgie sont conçues pour maintenir et transmettre les informations relatives à une quatrième priorité.

31. Appareil selon la revendication 30, dans lequel la quatrième priorité est supérieure à la première, deuxième et troisième priorité, et dans lequel la première priorité est de préférence inférieure à la deuxième et troisième priorité.

32. Appareil selon la revendication 28, comprenant en outre des moyens de réservoir retenant l'eau, eau stérile ou déminéralisée, et dans lequel l'élément consommant de l'énergie (12, J201-205) d'une unité externe (100, 12, J201-210) comprend une pompe (27) destinée à fournir l'eau provenant des moyens de réservoir à la bouche du patient.

33. Appareil selon la revendication 28, comprenant en outre des moyens de retenue du trop-plein pour la retenue du trop-plein de liquide, et dans lequel l'élément consommant de l'énergie (12, J201-205) d'une unité externe (100, 12, J201-210) comprend une pompe destinée à aspirer le liquide excédentaire dans la bouche du patient et dans les moyens de retenue du trop-plein.

34. Appareil selon la revendication 28, comprenant en outre une unité externe (100, 12, J201-210) destinée à fournir de l'air pressurisé, l'élément consommant de l'énergie (12, J201-205) de l'unité externe (100, 12, J201-210) comprenant des moyens de pompage.

35. Unité mobile (60) destinée à être utilisée par un dentiste dans un cabinet dentaire (72), l'unité mobile comprenant des moyens d'assise, pour permettre au dentiste de s'asseoir ou de se reposer pendant les soins effectués sur un patient, et un appareil selon la revendication 28.

36. Unité mobile selon la revendication 35, dans laquelle les moyens d'assise comprennent des moyens de batterie pour l'alimentation de l'unité de sécurité.

37. Unité mobile selon la revendication 35 ou 36, comprenant en outre des moyens de réservoir retenant l'eau, eau stérile ou déminéralisée, et dans laquelle l'élément consommant de l'énergie (12, J201-205) d'une unité externe (100, 12, J201-210) comprend une pompe destinée à fournir l'eau provenant des moyens de réservoir à la bouche du patient, les moyens de réservoir étant retenus par les moyens d'assise (60).

38. Unité mobile selon l'une quelconque des revendication 35-37, comprenant en outre des moyens de retenue du trop-plein (28) pour la retenue du trop-plein de liquide, et dans laquelle l'élément consommant de l'énergie (12, J201-205) d'une unité externe (100, 12, J201-210) comprend une pompe destinée à aspirer le liquide excédentaire dans la bouche du patient et dans les moyens de retenue du trop-plein, les moyens de retenue du trop-plein (28) étant retenus par les moyens d'assise (60).

39. Unité mobile selon l'une quelconque des revendications 35-38, dans laquelle les moyens d'assise (60) comprennent un siège (61) pour permettre au dentiste de s'asseoir ou de se reposer, un dossier (62) et des moyens de retenue (65) de l'appareil, le dossier (62) ayant une forme correspondant au moins sensiblement à une partie de cercle, et les moyens de retenue (65) comprenant une ou plusieurs parties, chacune d'entre elles ayant une forme correspondant au moins à une partie de cercle.

40. Unité mobile selon la revendication 39, dans laquelle les moyens de retenue (65) sont mobiles entre une première position fermée et une seconde position ouverte, dans laquelle les moyens de retenue (65) et le dossier (62) présentent dans la première position une forme cylindrique essentiellement circulaire, et au moins sensiblement horizontale, le siège (61) étant de préférence positionné à l'intérieur de la forme cylindrique circulaire, si l'on regarde dans le sens vertical.

41. Unité mobile selon la revendication 39, comprenant en outre des seconds moyens cylindriques au moins sensiblement circulaires ayant une position verticale inférieure au dossier (62) et aux moyens de retenue (65), et ayant au moins sensiblement les mêmes dimensions externes que ceux-ci.

42. Unité mobile selon la revendication 41, dans laquelle les seconds moyens cylindriques au moins sensiblement circulaires comprennent des moyens d'occupation d'une source d'énergie et des moyens de transmission de l'énergie reçue à des moyens de batterie conçus pour fournir l'énergie au module de sécurité.

43. Unité mobile selon l'une quelconque des revendications 35-42 qui est conçue pour ne pas nécessiter l'ajout ou la fourniture d'eau, de courant ou d'air pressurisé d'une position externe à l'unité (60) et ne pas nécessiter l'accès aux installations contenant les déchets situées en dehors de l'unité.

44. Cabinet dentaire comprenant un ou plusieurs moyens d'assise (71) pour le repos des patients pendant les soins effectués sur leurs dents, et une ou plusieurs unités mobiles (60) selon l'une quelconque des revendications 35-43.

45. Cabinet dentaire selon la revendication 44, le cabinet étant conçu pour ne pas comprendre de conduites, lignes ou fils fixes pour la fourniture d'eau, de courant ou de liquide excédentaire vers et depuis les unités mobiles (60) pendant le traitement des dents d'un patient.

46. Cabinet dentaire selon la revendication 44 ou 45, comprenant en outre un emplacement (72) destiné au nettoyage des éléments consommant de l'énergie (12, J201-205) des unités externes (100, 12, J201-210) ayant été utilisés lors du traitement des dents d'un patient.

47. Cabinet dentaire selon la revendication 46, dans lequel l'emplacement (72) est différent des emplacements dans lesquels sont positionnés les moyens d'assise (71) des patients.
